# EUROPEAN PATENT APPLICATION

(11) **EP 4 408 089 A1**
(43) Date of publication of application: **31.07.2024**
(21) Application number: 22883003.0
(22) Date of filing: 24.10.2022
(51) Int. Cl.: H04W 64/00

(54) **COMMUNICATION METHOD AND APPARATUS**

(30) Priority: 22.10.2021 CN 202111236065
(71) Applicant: Huawei Technologies Co., Ltd., Shenzhen, Guangdong 518129 (CN)
(72) Inventor: HAO, Jinping, Shenzhen, Guangdong 518129 (CN)
(74) Representative: Gill Jennings & Every LLP
(86) International application number: PCT/CN2022/127114
(87) International publication number: WO 2023/066399

(57) **Abstract**

This application provides a communication method and apparatus, which may be used in an NR system or an LTE system, to accurately locate a terminal device. The method includes: An access network device receives an uplink positioning signal from at least one assistant device, and sends a measurement result to a location management function network element. The uplink positioning signal is an uplink positioning signal sent by a terminal device. The measurement result is determined based on the uplink positioning signal. The measurement result includes one or more of the following: information about the at least one assistant device, relative time of arrival, or a time difference of arrival. The information about the at least one assistant device includes one or more of the following: an identifier of the at least one assistant device, a location of the at least one assistant device, a latency of the at least one assistant device, information about an angle between the at least one assistant device and the access network device, a distance between the at least one assistant device and the access network device, or signal propagation time between the at least one assistant device and the access network device.

## Description

This application claims priority to Chinese Patent Application No. 202111236065.2, filed with the China National Intellectual Property Administration on October 22, 2021 and entitled "COMMUNICATION METHOD AND APPARATUS", which is incorporated herein by reference in its entirety.

### TECHNICAL FIELD

This application relates to the field of communication, and in particular, to a communication method and apparatus.

### BACKGROUND

During uplink positioning, there needs to be a direct path between a terminal device and an access network device, which is also referred to as a line of sight (light of sight, LoS), to ensure that a distance between the access network device and the terminal device can be determined based on a measurement result obtained by the access network device by measuring a sounding reference signal (sounding reference signal, SRS) sent by the terminal device, to obtain a location of the terminal device.

However, in an actual deployment scenario, there may be an obstruction between a terminal device and an access network device, resulting in failure to accurately locate the terminal device.

### SUMMARY

Embodiments of this application provide a communication method and apparatus, to accurately locate a terminal device.

The following technical solutions are used in this application.

According to a first aspect, a communication method is provided. The method includes: An access network device receives an uplink positioning signal from at least one assistant device, and sends a measurement result to a location management function (location management function, LMF) network element. The uplink positioning signal is an uplink positioning signal sent by a terminal device. The measurement result is determined based on the uplink positioning signal.

It can be learned based on the method according to the first aspect that at least one assistant device is disposed between the terminal device and the access network device, and even if there is no direct path between the terminal device and the access network device, the at least one assistant device can reflect or forward the uplink positioning signal sent by the terminal device, so that the access network device can receive the uplink positioning signal, implementing accurate positioning of the terminal device.

In a possible design solution, the measurement result may include one or more of the following: information about the at least one assistant device, relative time of arrival (relative time of arrival, RTOA), or a time difference of arrival (time difference of arrival, TDOA). Optionally, the information about the at least one assistant device may include one or more of the following: an identifier of the at least one assistant device, a location of the at least one assistant device, a latency of the at least one assistant device, information about an angle between the at least one assistant device and the access network device, a distance between the at least one assistant device and the access network device, or signal propagation time between the at least one assistant device and the access network device.

Optionally, the RTOA is RTOA at which the uplink positioning signal arrives at the at least one assistant device, or the RTOA is RTOA at which the uplink positioning signal arrives at the access network device after passing through the at least one assistant device.

Optionally, the TDOA is a TDOA between time at which the uplink positioning signals arrive at the different assistant devices, or the TDOA is a TDOA between time at which the uplink positioning signals arrive at the access network device after passing through the different assistant devices.

It can be learned that on the basis of obtaining the information about the at least one assistant device, the LMF network element can locate the terminal device not only based on various RTOA but also based on various TDOAs, to implement compatibility between a plurality of positioning manners, and improve flexibility and practical applicability of positioning.

In a possible design solution, the measurement result may be carried in one or more of the following: a measurement response (measurement response) message or a measurement report (measurement report) message, to implement signaling multiplexing and reduce communication overheads.

In a possible design solution, before the access network device sends the measurement result to the LMF network element, the method according to the first aspect may further include: The access network device receives first information from the LMF network element. In other words, when there is no first information, the access network device may choose to report the RTOA or the TDOA, or choose to report RTOA at which the uplink positioning signal arrives at the access network device, that is, ordinary RTOA at which the uplink positioning signal arrives at the access network device without passing through the assistant device. However, when the first information exists, the access network device reports RTOA or a TDOA indicated by the first information, that is, reports, based on the first information, the measurement result including the information about the at least one assistant device to the access network device, to implement that the terminal device is located by using the at least one assistant device.

Optionally, the first information may be carried in a measurement request (measurement request) message, to implement signaling multiplexing and reduce communication overheads.

In a possible design solution, the method according to the first aspect may further include: The access network device sends the information about the at least one assistant device to the LMF network element. In other words, if the information about the at least one assistant device is not configured on the LMF network element in advance, the access network device may send the information about the at least one assistant device to the LMF network element before performing measurement for positioning, so that the LMF network element can locate the terminal device based on the information about the at least one assistant device subsequently.

Optionally, the information about the at least one assistant device may be carried in a transmission reception point (transmission reception point, TRP) information response (TRP information response) message, to implement signaling multiplexing and reduce communication overheads.

Optionally, before the access network device sends the information about the at least one assistant device to the LMF network element, the method according to the first aspect may further include: The access network device receives second information from the LMF network element. In other words, if the LMF network element needs to use an assistant device for positioning, the LMF network element may send the second information to the access network device, so that the access network device may report the information about the at least one assistant device to the access network device based on the second information. In this way, the information about the at least one assistant device is reported only when being required by the LMF network element, to improve communication efficiency.

Optionally, the second information may be carried in a TRP information request (TRP information request) message, to implement signaling multiplexing and reduce communication overheads.

In a possible design solution, there is a direct path between the at least one assistant device and the access network device, to ensure that the access network device can receive the uplink positioning signal reflected or forwarded by the at least one assistant device, and to ensure accuracy and reliability of positioning.

According to a second aspect, a communication method is provided. The method includes: An LMF network element receives a measurement result from an access network device, and determines a location of a terminal device based on the measurement result. The measurement result includes information about at least one assistant device. The at least one assistant device is configured to reflect or forward an uplink positioning signal from the terminal device.

In a possible design solution, the measurement result may include one or more of the following: the information about the at least one assistant device, relative time of arrival RTOA, or a time difference of arrival TDOA. Optionally, the information about the at least one assistant device includes one or more of the following: an identifier of the at least one assistant device, a location of the at least one assistant device, a latency of the at least one assistant device, information about an angle between the at least one assistant device and the access network device, a distance between the at least one assistant device and the access network device, or signal propagation time between the at least one assistant device and the access network device.

Optionally, the RTOA is RTOA at which the uplink positioning signal arrives at the at least one assistant device, or the RTOA is RTOA at which the uplink positioning signal arrives at the access network device after passing through the at least one assistant device.

Optionally, the TDOA is a TDOA between time at which the uplink positioning signals arrive at the different assistant devices, or the TDOA is a TDOA between time at which the uplink positioning signals arrive at the access network device after passing through the different assistant devices.

In a possible design solution, the measurement result may be carried in one or more of the following: a measurement response message or a measurement report message.

In a possible design solution, before the LMF network element receives the measurement result from the access network device, the method according to the second aspect may further include: The LMF network element sends first information to the access network device. The first information indicates the access network device to report the measurement result.

Optionally, the first information may be carried in a measurement request message.

In a possible design solution, the method according to the second aspect may further include: The location management network receives the information about the at least one assistant device from the access network device.

Optionally, the information about the at least one assistant device may be carried in a transmission reception point TRP information response message.

In a possible design solution, before the location management network receives the information about the at least one assistant device from the access network device, the method according to the second aspect may further include: The LMF network element sends second information to the access network device. The second information indicates the access network device to report the information about the at least one assistant device.

Optionally, the second information is carried in a TRP information request message.

In addition, for technical effects of the method according to the second aspect, refer to the technical effects of the method according to the first aspect. Details are not described herein again.

According to a third aspect, a communication method is provided. The method includes: An access network device sends information about at least one assistant device to an LMF network element. The information about the at least one assistant device is used by the LMF network element for determining a location of a terminal device. The at least one assistant device is configured to reflect or forward an uplink positioning signal from the terminal device.

Optionally, the information about the at least one assistant device may be carried in a TRP information response message.

Optionally, the information about the at least one assistant device may include one or more of the following: an identifier of the at least one assistant device, a location of the at least one assistant device, a latency of the at least one assistant device, information about an angle between the at least one assistant device and the access network device, a distance between the at least one assistant device and the access network device, or signal propagation time between the at least one assistant device and the access network device.

Optionally, before the access network device sends the information about the at least one assistant device to the LMF network element, the method according to the third aspect may further include: The access network device receives second information from the LMF network element. The second information indicates the access network device to report the information about the at least one assistant device.

Optionally, the second information may be carried in a TRP information request message.

In a possible design solution, the method according to the third aspect may further include: The access network device receives an uplink positioning signal from the at least one assistant device, and sends a measurement result to the LMF network element. The uplink positioning signal is an uplink positioning signal sent by the terminal device. The measurement result is determined based on the uplink positioning signal.

In a possible design solution, the measurement result may include one or more of the following: the information about the at least one assistant device, RTOA, or a TDOA.

Optionally, the RTOA is RTOA at which the uplink positioning signal arrives at the at least one assistant device, or the RTOA is RTOA at which the uplink positioning signal arrives at the access network device after passing through the at least one assistant device.

Optionally, the TDOA is a TDOA between time at which the uplink positioning signals arrive at the different assistant devices, or the TDOA is a TDOA between time at which the uplink positioning signals arrive at the access network device after passing through the different assistant devices.

In a possible design solution, the measurement result may be carried in one or more of the following: a measurement response message or a measurement report message.

In a possible design solution, before the access network device sends the measurement result to the LMF network element, the method according to the third aspect may further include: The access network device receives first information from the LMF network element. The first information indicates the access network device to report the measurement result.

Optionally, the first information may be carried in a measurement request message.

In a possible design solution, there is a direct path between the at least one assistant device and the access network device.

In addition, for technical effects of the method according to the third aspect, refer to the technical effects of the method according to the first aspect. Details are not described herein again.

According to a fourth aspect, a communication method is provided. The method includes: An LMF network element receives information about at least one assistant device from an access network device. The information about the at least one assistant device is used by the LMF network element for determining a location of a terminal device. The at least one assistant device is configured to reflect or forward an uplink positioning signal from the terminal device.

Optionally, the information about the at least one assistant device may be carried in a TRP information response message.

Optionally, the information about the at least one assistant device may include one or more of the following: an identifier of the at least one assistant device, a location of the at least one assistant device, a latency of the at least one assistant device, information about an angle between the at least one assistant device and the access network device, a distance between the at least one assistant device and the access network device, or signal propagation time between the at least one assistant device and the access network device.

Optionally, before the LMF network element receives the information about the at least one assistant device from the access network device, the method according to the fourth aspect may further include: The LMF network element sends second information to the access network device. The second information indicates the access network device to report the information about the at least one assistant device.

Optionally, the second information may be carried in a TRP information request message.

In a possible design solution, the method according to the fourth aspect may further include: The LMF network element receives a measurement result from the access network device, and determines the location of the terminal device based on the measurement result. The measurement result includes the information about the at least one assistant device. The at least one assistant device is configured to reflect or forward an uplink positioning signal from the terminal device.

In a possible design solution, the measurement result may include one or more of the following: the information about the at least one assistant device, RTOA, or a TDOA.

Optionally, the RTOA is RTOA at which the uplink positioning signal arrives at the at least one assistant device, or the RTOA is RTOA at which the uplink positioning signal arrives at the access network device after passing through the at least one assistant device.

Optionally, the TDOA is a TDOA between time at which the uplink positioning signals arrive at the different assistant devices, or the TDOA is a TDOA between time at which the uplink positioning signals arrive at the access network device after passing through the different assistant devices.

In a possible design solution, the measurement result may be carried in one or more of the following: a measurement response message or a measurement report message.

In a possible design solution, before the LMF network element receives the measurement result from the access network device, the method according to the fourth aspect may further include: The LMF network element sends first information to the access network device. The first information indicates the access network device to report the measurement result.

Optionally, the first information may be carried in a measurement request message.

In addition, for technical effects of the method according to the fourth aspect, refer to the technical effects of the method according to the first aspect. Details are not described herein again.

According to a fifth aspect, a communication method is provided. The method includes: An assistant device receives an uplink positioning signal from a terminal device, and sends the uplink positioning signal to an access network device. Alternatively, the assistant device reflects or forwards, to the access network device, the uplink positioning signal from the terminal device.

In addition, for technical effects of the method according to the fifth aspect, refer to the technical effects of the method according to the first aspect. Details are not described herein again.

According to a sixth aspect, a communication apparatus is provided. The apparatus includes a receiving module and a sending module. The receiving module is configured to receive an uplink positioning signal from at least one assistant device. The sending module is configured to send a measurement result to an LMF network element. The uplink positioning signal is an uplink positioning signal sent by a terminal device. The measurement result is determined based on the uplink positioning signal.

In a possible design solution, the measurement result may include one or more of the following: information about the at least one assistant device, RTOA, or a TDOA. Optionally, the information about the at least one assistant device may include one or more of the following: an identifier of the at least one assistant device, a location of the at least one assistant device, a latency of the at least one assistant device, information about an angle between the at least one assistant device and the communication apparatus according to the sixth aspect, a distance between the at least one assistant device and the communication apparatus according to the sixth aspect, or signal propagation time between the at least one assistant device and the communication apparatus according to the sixth aspect.

Optionally, the RTOA is RTOA at which the uplink positioning signal arrives at the at least one assistant device, or the RTOA is RTOA at which the uplink positioning signal arrives at the communication apparatus according to the sixth aspect after passing through the at least one assistant device.

Optionally, the TDOA is a TDOA between time at which the uplink positioning signals arrive at the different assistant devices, or the TDOA is a TDOA between time at which the uplink positioning signals arrive at the communication apparatus according to the sixth aspect after passing through the different assistant devices.

In a possible design solution, the measurement result may be carried in one or more of the following: a measurement response message or a measurement report message.

In a possible design solution, the receiving module is further configured to: before the sending module sends the measurement result to the LMF network element, receive first information from the LMF network element. The first information indicates the communication apparatus according to the sixth aspect to report the measurement result.

Optionally, the first information may be carried in a measurement request message.

In a possible design solution, the sending module is further configured to send the information about the at least one assistant device to the LMF network element.

Optionally, the information about the at least one assistant device may be carried in a TRP information response message.

Optionally, the receiving module is further configured to: before the sending module sends the information about the at least one assistant device to the LMF network element, receive second information from the LMF network element. The second information indicates the communication apparatus according to the sixth aspect to report the information about the at least one assistant device.

Optionally, the second information may be carried in a TRP information request message.

In a possible design solution, there is a direct path between the at least one assistant device and the communication apparatus according to the sixth aspect.

Optionally, the sending module and the receiving module may be alternatively integrated to form a module, for example, a transceiver module. The transceiver module is configured to implement transmission and reception functions of the apparatus according to the sixth aspect.

Optionally, the apparatus according to the sixth aspect may further include a processing module. The processing module is configured to implement a processing function of the apparatus.

Optionally, the apparatus according to the sixth aspect may further include a storage module. The storage module stores a program or instructions. When the processing module executes the program or instructions, the apparatus is enabled to perform the method according to the first aspect.

It should be noted that the apparatus according to the sixth aspect may be a network device, for example, an access network device, or may be a chip (system) or another part or component that can be disposed in the network device, or may be an apparatus including the network device. This is not limited in this application.

In addition, for technical effects of the apparatus according to the sixth aspect, refer to the technical effects of the method according to the first aspect. Details are not described herein again.

According to a seventh aspect, a communication apparatus is provided. The apparatus includes a transceiver module and a processing module. The transceiver module is configured to receive a measurement result from an access network device. The processing module is configured to determine a location of a terminal device based on the measurement result. The measurement result includes information about at least one assistant device. The at least one assistant device is configured to reflect or forward an uplink positioning signal from the terminal device.

In a possible design solution, the measurement result may include one or more of the following: the information about the at least one assistant device, relative time of arrival RTOA, or a time difference of arrival TDOA. Optionally, the information about the at least one assistant device includes one or more of the following: an identifier of the at least one assistant device, a location of the at least one assistant device, a latency of the at least one assistant device, information about an angle between the at least one assistant device and the access network device, a distance between the at least one assistant device and the access network device, or signal propagation time between the at least one assistant device and the access network device.

Optionally, the RTOA is RTOA at which the uplink positioning signal arrives at the at least one assistant device, or the RTOA is RTOA at which the uplink positioning signal arrives at the access network device after passing through the at least one assistant device.

Optionally, the TDOA is a TDOA between time at which the uplink positioning signals arrive at the different assistant devices, or the TDOA is a TDOA between time at which the uplink positioning signals arrive at the access network device after passing through the different assistant devices.

In a possible design solution, the measurement result may be carried in one or more of the following: a measurement response message or a measurement report message.

In a possible design solution, the transceiver module is further configured to: before receiving the measurement result from the access network device, send first information to the access network device. The first information indicates the access network device to report the measurement result.

Optionally, the first information may be carried in a measurement request message.

In a possible design solution, the transceiver module is further configured to receive the information about the at least one assistant device from the access network device.

Optionally, the information about the at least one assistant device may be carried in a transmission reception point TRP information response message.

In a possible design solution, the transceiver module is further configured to: before receiving the information about the at least one assistant device from the access network device, send second information to the access network device. The second information indicates the access network device to report the information about the at least one assistant device.

Optionally, the seventh information is carried in a TRP information request message.

Optionally, the transceiver module may alternatively include a sending module and a receiving module. The sending module is configured to implement a transmission function of the apparatus according to the seventh aspect. The receiving module is configured to implement a reception function of the apparatus according to the seventh aspect.

Optionally, the apparatus according to the seventh aspect may further include a storage module. The storage module stores a program or instructions. When the processing module executes the program or instructions, the apparatus is enabled to perform the method according to the second aspect.

It should be noted that the apparatus according to the seventh aspect may be a network device, for example, an LMF network element, or may be a chip (system) or another part or component that can be disposed in the network device, or may be an apparatus including the network device. This is not limited in this application.

In addition, for technical effects of the method according to the seventh aspect, refer to the technical effects of the method according to the first aspect. Details are not described herein again.

According to an eighth aspect, a communication apparatus is provided. The apparatus includes a sending module, configured to send information about at least one assistant device to an LMF network element. The information about the at least one assistant device is used by the LMF network element for determining a location of a terminal device. The at least one assistant device is configured to reflect or forward an uplink positioning signal from the terminal device.

Optionally, the information about the at least one assistant device may be carried in a TRP information response message.

Optionally, the information about the at least one assistant device may include one or more of the following: an identifier of the at least one assistant device, a location of the at least one assistant device, a latency of the at least one assistant device, information about an angle between the at least one assistant device and the communication apparatus according to the eighth aspect, a distance between the at least one assistant device and the communication apparatus according to the eighth aspect, or signal propagation time between the at least one assistant device and the communication apparatus according to the eighth aspect.

Optionally, the apparatus according to the eighth aspect may further include a receiving module. The receiving module is configured to: before the sending module sends the information about the at least one assistant device to the LMF network element, receive second information from the LMF network element. The second information indicates the communication apparatus according to the eighth aspect to report the information about the at least one assistant device.

Optionally, the second information may be carried in a TRP information request message.

In a possible design solution, the apparatus according to the eighth aspect may further include a receiving module. The receiving module is configured to receive an uplink positioning signal from the at least one assistant device. The sending module is further configured to send a measurement result to the LMF network element. The uplink positioning signal is an uplink positioning signal sent by the terminal device. The measurement result is determined based on the uplink positioning signal.

In a possible design solution, the measurement result may include one or more of the following: the information about the at least one assistant device, RTOA, or a TDOA.

Optionally, the RTOA is RTOA at which the uplink positioning signal arrives at the at least one assistant device, or the RTOA is RTOA at which the uplink positioning signal arrives at the communication apparatus according to the eighth aspect after passing through the at least one assistant device.

Optionally, the TDOA is a TDOA between time at which the uplink positioning signals arrive at the different assistant devices, or the TDOA is a TDOA between time at which the uplink positioning signals arrive at the communication apparatus according to the eighth aspect after passing through the different assistant devices.

In a possible design solution, the measurement result may be carried in one or more of the following: a measurement response message or a measurement report message.

In a possible design solution, the apparatus according to the eighth aspect may further include the receiving module. The receiving module is configured to: before the sending module sends the measurement result to the LMF network element, receive first information from the LMF network element. The first information indicates the communication apparatus according to the eighth aspect to report the measurement result.

Optionally, the first information may be carried in a measurement request message.

In a possible design solution, there is a direct path between the at least one assistant device and the communication apparatus according to the eighth aspect.

Optionally, the sending module and the receiving module may be alternatively integrated to form a module, for example, a transceiver module. The transceiver module is configured to implement transmission and reception functions of the apparatus according to the eighth aspect.

Optionally, the apparatus according to the eighth aspect may further include a processing module. The processing module is configured to implement a processing function of the apparatus.

Optionally, the apparatus according to the eighth aspect may further include a storage module. The storage module stores a program or instructions. When the processing module executes the program or instructions, the apparatus is enabled to perform the method according to the third aspect.

It should be noted that the apparatus according to the eighth aspect may be a network device, for example, an access network device, or may be a chip (system) or another part or component that can be disposed in the network device, or may be an apparatus including the network device. This is not limited in this application.

In addition, for technical effects of the apparatus according to the eighth aspect, refer to the technical effects of the method according to the first aspect. Details are not described herein again.

According to a ninth aspect, a communication apparatus is provided. The apparatus includes a transceiver module. The transceiver module is configured to receive information about at least one assistant device from an access network device. The information about the at least one assistant device is used by the communication apparatus according to the ninth aspect for determining a location of a terminal device. The at least one assistant device is configured to reflect or forward an uplink positioning signal from the terminal device.

Optionally, the information about the at least one assistant device may be carried in a TRP information response message.

Optionally, the information about the at least one assistant device may include one or more of the following: an identifier of the at least one assistant device, a location of the at least one assistant device, a latency of the at least one assistant device, information about an angle between the at least one assistant device and the access network device, a distance between the at least one assistant device and the access network device, or signal propagation time between the at least one assistant device and the access network device.

Optionally, the transceiver module is further configured to: before receiving the information about the at least one assistant device from the access network device, send second information to the access network device. The second information indicates the access network device to report the information about the at least one assistant device.

Optionally, the second information may be carried in a TRP information request message.

In a possible design solution, the apparatus according to the ninth aspect may further include a processing module. The transceiver module is further configured to receive a measurement result from the access network device. The processing module is configured to determine the location of the terminal device based on the measurement result. The measurement result includes the information about the at least one assistant device. The at least one assistant device is configured to reflect or forward an uplink positioning signal from the terminal device.

In a possible design solution, the measurement result may include one or more of the following: the information about the at least one assistant device, RTOA, or a TDOA.

Optionally, the RTOA is RTOA at which the uplink positioning signal arrives at the at least one assistant device, or the RTOA is RTOA at which the uplink positioning signal arrives at the access network device after passing through the at least one assistant device.

Optionally, the TDOA is a TDOA between time at which the uplink positioning signals arrive at the different assistant devices, or the TDOA is a TDOA between time at which the uplink positioning signals arrive at the access network device after passing through the different assistant devices.

In a possible design solution, the measurement result may be carried in one or more of the following: a measurement response message or a measurement report message.

In a possible design solution, the transceiver module is further configured to: before receiving the measurement result from the access network device, send first information to the access network device. The first information indicates the access network device to report the measurement result.

Optionally, the first information may be carried in a measurement request message.

Optionally, the transceiver module may alternatively include a sending module and a receiving module. The sending module is configured to implement a transmission function of the apparatus according to the ninth aspect. The receiving module is configured to implement a reception function of the apparatus according to the ninth aspect.

Optionally, the apparatus according to the ninth aspect may further include a storage module. The storage module stores a program or instructions. When the processing module executes the program or instructions, the apparatus is enabled to perform the method according to the fourth aspect.

It should be noted that the apparatus according to the ninth aspect may be a network device, for example, an LMF network element, or may be a chip (system) or another part or component that can be disposed in the network device, or may be an apparatus including the network device. This is not limited in this application.

In addition, for technical effects of the method according to the ninth aspect, refer to the technical effects of the method according to the first aspect. Details are not described herein again.

According to a tenth aspect, a communication apparatus is provided. The communication apparatus includes a transceiver module. The transceiver module is configured to: receive an uplink positioning signal from a terminal device, and send the uplink positioning signal to an access network device. Alternatively, the transceiver module is configured to reflect, to the access network device, the uplink positioning signal from the terminal device.

Optionally, the transceiver module may alternatively include a sending module and a receiving module. The sending module is configured to implement a transmission function of the apparatus according to the tenth aspect. The receiving module is configured to implement a reception function of the apparatus according to the tenth aspect.

Optionally, the apparatus according to the tenth aspect may further include a processing module. The processing module is configured to implement a processing function of the apparatus.

Optionally, the apparatus according to the tenth aspect may further include a storage module. The storage module stores a program or instructions. When the processing module executes the program or instructions, the apparatus is enabled to perform the method according to the fifth aspect.

It should be noted that the apparatus according to the tenth aspect may be a network device, for example, an assistant device, or may be a chip (system) or another part or component that can be disposed in the network device, or may be an apparatus including the network device. This is not limited in this application.

In addition, for technical effects of the communication apparatus according to the tenth aspect, refer to the technical effects of the method according to the first aspect. Details are not described herein again.

According to an eleventh aspect, a communication apparatus is provided. The apparatus includes a processor. The processor is configured to perform the method according to any one of the first aspect to the fifth aspect.

In a possible design solution, the apparatus according to the eleventh aspect may further include a transceiver. The transceiver may be a transceiver circuit or an interface circuit. The transceiver may be configured for communication between the apparatus and another apparatus.

In a possible design solution, the apparatus according to the eleventh aspect may further include a memory. The memory may be integrated with the processor or disposed separately. The memory may be configured to store a computer program and/or data used in the method according to any one of the first aspect to the fifth aspect.

In this application, the apparatus according to the eleventh aspect may be the network device according to any one of the first aspect to the fifth aspect, for example, the access network device, the LMF network element, or the assistant device, or may be a chip (system) or another part or component that can be disposed in the network device, or may be an apparatus including the network device.

In addition, for technical effects of the apparatus according to the eleventh aspect, refer to the technical effects of the method according to any one of the first aspect to the fifth aspect. Details are not described herein again.

According to a twelfth aspect, a communication apparatus is provided. The apparatus includes a processor and a memory. The memory is configured to store computer instructions. When the processor executes the instructions, the apparatus is enabled to perform the method according to any one of the first aspect to the fifth aspect.

In a possible design solution, the apparatus according to the twelfth aspect may further include a transceiver. The transceiver may be a transceiver circuit or an interface circuit. The transceiver may be configured for communication between the apparatus and another apparatus.

In this application, the apparatus according to the twelfth aspect may be the network device according to any one of the first aspect to the fifth aspect, for example, the access network device, the LMF network element, or the assistant device, or may be a chip (system) or another part or component that can be disposed in the network device, or may be an apparatus including the network device.

In addition, for technical effects of the apparatus according to the twelfth aspect, refer to the technical effects of the method according to any one of the first aspect to the fifth aspect. Details are not described herein again.

According to a thirteenth aspect, a communication apparatus is provided. The apparatus includes a logic circuit and an input/output interface. The input/output interface is configured to receive code instructions and send the code instructions to the logic circuit. The logic circuit is configured to run the code instructions to perform the method according to any one of the first aspect to the fifth aspect.

In a possible design solution, the apparatus according to the thirteenth aspect may further include a transceiver. The transceiver may be a transceiver circuit or an interface circuit. The transceiver may be configured for communication between the apparatus and another apparatus.

In a possible design solution, the apparatus according to the thirteenth aspect may further include a memory. The memory may be integrated with the processor or disposed separately. The memory may be configured to store a computer program and/or data used in the method according to any one of the first aspect to the fifth aspect.

In this application, the apparatus according to the twelfth aspect may be the network device according to any one of the first aspect to the fifth aspect, for example, the access network device, the LMF network element, or the assistant device, or may be a chip (system) or another part or component that can be disposed in the network device, or may be an apparatus including the network device.

In addition, for technical effects of the apparatus according to the thirteenth aspect, refer to the technical effects of the method according to any one of the first aspect to the fifth aspect. Details are not described herein again.

According to a fourteenth aspect, a communication apparatus is provided. The apparatus includes a processor and a transceiver. The transceiver is configured for information exchange between the communication apparatus and another apparatus. The processor executes program instructions to perform the method according to any one of the first aspect to the fifth aspect.

In a possible design solution, the apparatus according to the fourteenth aspect may further include a memory. The memory may be integrated with the processor or disposed separately. The memory may be configured to store a computer program and/or data used in the method according to any one of the first aspect to the fifth aspect.

In this application, the apparatus according to the fourteenth aspect may be the network device according to any one of the first aspect to the fifth aspect, for example, the access network device, the LMF network element, or the assistant device, or may be a chip (system) or another part or component that can be disposed in the network device, or may be an apparatus including the network device.

In addition, for technical effects of the apparatus according to the fourteenth aspect, refer to the technical effects of the method according to any one of the first aspect to the fifth aspect. Details are not described herein again.

According to a fifteenth aspect, a communication system is provided. The communication system includes the network device according to any one of the first aspect to the fifth aspect, for example, the access network device, the LMF network element, or the assistant device.

According to a sixteenth aspect, a computer-readable storage medium is provided, including a computer program. When the computer program is run on a computer, the method according to any one of the first aspect to the fifth aspect is performed.

According to a seventeenth aspect, a computer program product is provided, including a computer program. When the computer program or instructions are run on a computer, the method according to any one of the first aspect to the fifth aspect is performed.

### BRIEF DESCRIPTION OF DRAWINGS

FIG. 1 is a schematic diagram of a network architecture;
FIG. 2 is a schematic diagram of an uplink positioning scenario;
FIG. 3 is a schematic flowchart 1 of a communication method according to an embodiment of this application;
FIG. 4 is a schematic diagram of a positioning scenario in a communication method according to an embodiment of this application;
FIG. 5 is a schematic flowchart 2 of a communication method according to an embodiment of this application;
FIG. 6A and FIG. 6B are schematic flowcharts 3 of a communication method according to an embodiment of this application;
FIG. 7 is a schematic diagram 1 of a structure of a communication apparatus according to an embodiment of this application;
FIG. 8 is a schematic diagram 2 of a structure of a communication apparatus according to an embodiment of this application; and
FIG. 9 is a schematic diagram 3 of a structure of a communication apparatus according to an embodiment of this application.

### DESCRIPTION OF EMBODIMENTS

The following describes technical terms used in embodiments of this application.

### 1. Network architecture

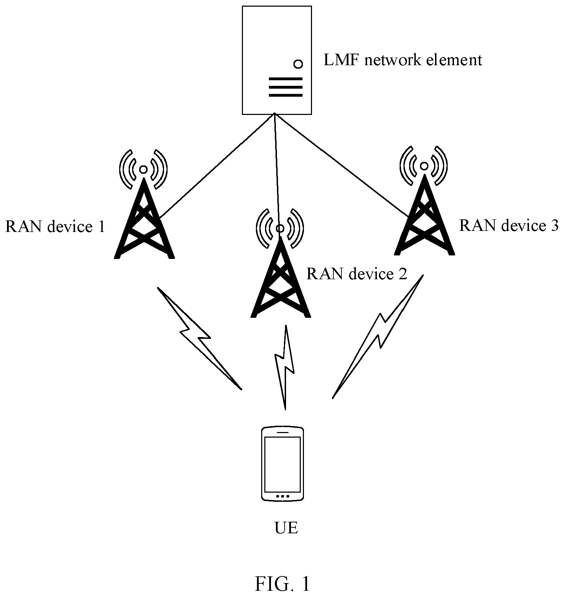

FIG. 1 is a diagram of an example architecture of a network according to this application. The network architecture mainly includes an access network device, for example, a radio access network (radio access network, RAN) device, a location management function (location management function, LMF) network element, and a terminal device, for example, user equipment (user equipment, UE).

There may be a plurality of RAN devices, for example, a RAN device 1, a RAN device 2, and a RAN device 3. The RAN device is configured to provide a network access function for terminal devices in a specific region, and can use transmission tunnels of different quality based on classes of terminal devices, service requirements, and the like. The RAN device can manage radio resources, provide access service for terminal devices, and further forward control signals and terminal device data between terminal devices and a network side. The RAN device may specifically include but is not limited to: a gNB in the 5th generation 5G, for example, an NR system; or one antenna panel or a group of antenna panels (including a plurality of antenna panels) of a base station in a 5th generation (5th generation, 5G) mobile communication system; or a network node constituting a gNB, a transmission point (transmission reception point, TRP, or transmission point, TP), or a transmission measurement function (transmission measurement function, TMF), for example, a baseband unit (BBU); or a central unit (central unit, CU), a distributed unit (distributed unit, DU), or a road side unit (road side unit, RSU) with base station functions; or a wired access gateway; or the like. In a future positioning network, the RAN device may still be a RAN device or have another name. This is not limited in this application. In addition, the RAN device may also include an access point (access point, AP) in a wireless fidelity (wireless fidelity, Wi-Fi) system, a wireless relay node, a wireless backhaul node, macro base stations in various forms, a micro base station (also referred to as a small cell), a relay station, an access point, a wearable device, and a vehicle-mounted device.

The LMF network element is configured to implement positioning and other functions. The LMF network element is an apparatus or a component deployed in a core network to provide a positioning function for terminal devices, and may be configured to determine locations of terminal devices. In this application, the LMF network element may be replaced with another apparatus or component that provides the positioning function for terminal devices, for example, a positioning server, a location management server, a location management function server, an LMF device, an LMF entity, an LMF network entity, or a network function. In a future positioning network, for example, a 6th generation (6th generation, 6G) mobile communication system, the LMF network element may still be an LMF network element or have another name. This is not limited in this application.

The terminal device is a terminal device that accesses the network and has wireless transceiver functions, or is a chip or chip system that can be disposed in the terminal device. The terminal device may also be referred to as user equipment, an access terminal, a subscriber unit, a subscriber station, a mobile station, a remote station, a remote terminal, a mobile device, a user terminal, a terminal, a wireless communication device, a user agent, or a user apparatus. The terminal in embodiments of this application may be a mobile phone (mobile phone), a tablet computer (Pad), a computer with wireless transceiver functions, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, an RSU with a terminal function, or the like. The terminal in this application may also be a vehicle-mounted module, a vehicle-mounted subassembly, a vehicle-mounted part, a vehicle-mounted chip, or a vehicle-mounted unit that is built in a vehicle as one or more parts or units.

The terminal device may access the network by using the RAN device and communicate with the LMF network element, so that the LMF network element performs uplink positioning for the terminal device.

It should be noted that for related functions implemented by an access network device, an LMF network element, and a terminal in the following description, reference may be made to a related description of the network architecture shown in FIG. 1. Details are not described one by one below again.

### 2. Uplink positioning

Uplink positioning is implemented as follows: An LMF network element, for example, an LMF network element, determines a location of a terminal device through that access network devices measure relative time of arrival (relative time of arrival, RTOA) at which an uplink positioning signal sent by the terminal device, for example, a sounding reference signal (sounding reference signal, SRS), arrives at the plurality of nearby access network devices, for example, RAN devices. For ease of understanding, the following uses an example for description.

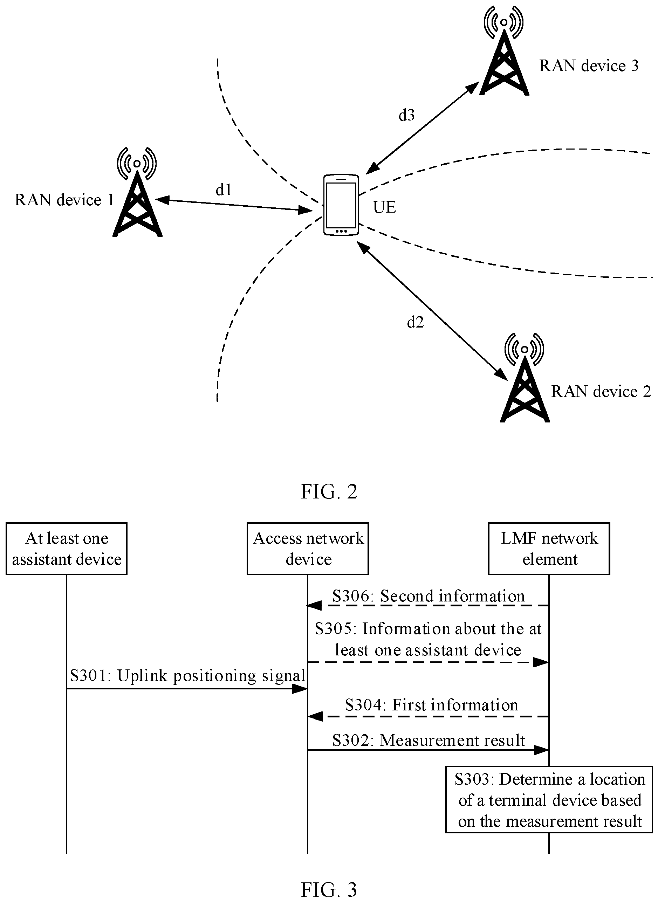

For example, as shown in FIG. 2, it is assumed that there are three RAN devices near UE, namely, a RAN device 1, a RAN device 2, and a RAN device 3. The UE sends SRSs. RTOA at which an SRS arrives at the RAN device 1 is t1, RTOA at which an SRS arrives at the RAN device 2 is t2, and RTOA at which an SRS arrives at the RAN device 3 is t3. In one manner, an LMF network element may determine, based on t1, that a distance between the UE and the RAN device 1 is d1, determine, based on t2, that a distance between the UE and the RAN device 2 is d2, and determine, based on t3, that a distance between the UE and the RAN device 3 is d3. In another manner, the LMF network element may determine a time difference between t1 and t2. The time difference indicates that a time difference of arrival (time difference of arrival, TDOA) between the time at which the SRS arrives at the RAN device 1 and the time at which the SRS arrives at the RAN device 2 is Δt1. Likewise, the LMF network element may determine a time difference between t1 and t3. The time difference indicates that a TDOA between the time at which the SRS arrives at the RAN device 1 and the time at which the SRS arrives at the RAN device 3 is Δt1. In this way, the LMF network element may determine a hyperbola 1 based on a distance difference between d1 and d2; or determine the distance difference based on Δt1 and then determine the hyperbola 1 based on the distance difference. Likewise, the LMF network element may determine a hyperbola 2 based on a distance difference between d1 and d3; or determine the distance difference based on Δt2 and then determine the hyperbola 2 based on the distance difference. An intersection O1 of the hyperbola 1 and the hyperbola 2 indicates a location of the UE. In this way, the LMF network element can determine the location of the UE based on locations of the three RAN devices and positional relationships between the intersection O1 and the three RAN devices, implementing uplink positioning of the UE.

The following describes the technical solutions in embodiments of this application.

The technical solutions in embodiments of this application are not limited to the network architecture shown in FIG. 1, and may also be used in various communication systems, such as a wireless fidelity (wireless fidelity, Wi-Fi) system, a vehicle to everything (vehicle to everything, V2X) communication system, a device-to-device (device-to-device, D2D) communication system, an internet of vehicles communication system, a 4th generation (4th generation, 4G) mobile communication system such as a long term evolution (long term evolution, LTE) system, a 5G mobile communication system such as a new radio (new radio, NR) system, and a future communication system such as a 6G mobile communication system.

All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may also be used.

In addition, in embodiments of this application, words such as "example" and "for example" are used to indicate an example, an instance, or descriptions. Any embodiment or design solution described as an "example" in this application should not be explained as being more preferred or having more advantages than another embodiment or design solution. Exactly, the word "example" is used to present a concept in a specific manner.

In embodiments of this application, terms "information (information)", "signal (signal)", "message (message)", "channel (channel)", and "signaling (signaling)" may sometimes be interchangeably used. It should be noted that meanings expressed by the terms are consistent when differences of the terms are not emphasized. In addition, words "of (of)", "relevant (corresponding, relevant)", and "corresponding (corresponding)" may sometimes be interchangeably used. It should be noted that meanings expressed by the words are consistent when differences of the words are not emphasized.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of a new service scenario, the technical solutions provided in embodiments of this application are also applicable to similar technical problems.

The following describes, in detail with reference to FIG. 3 to FIG. 5, communication methods provided in embodiments of this application.

For example, FIG. 3 is a schematic flowchart 1 of a communication method according to an embodiment of this application. The communication method may be applicable to communication between the access network devices and the LMF network element in the network architecture shown in FIG. 1. As shown in FIG. 3, the communication method includes the following steps.

S301: An access network device receives an uplink positioning signal from at least one assistant device.

The uplink positioning signal may be an SRS, or may be any possible uplink signal, for example, a random access preamble (random access preamble) message. This is not limited in this application. The uplink positioning signal may be an uplink positioning signal sent by a terminal device. For example, the terminal device sends the uplink positioning signal to the access network device based on an SRS configuration. The SRS configuration may be pre-configured by the access network device. This is not limited in this application.

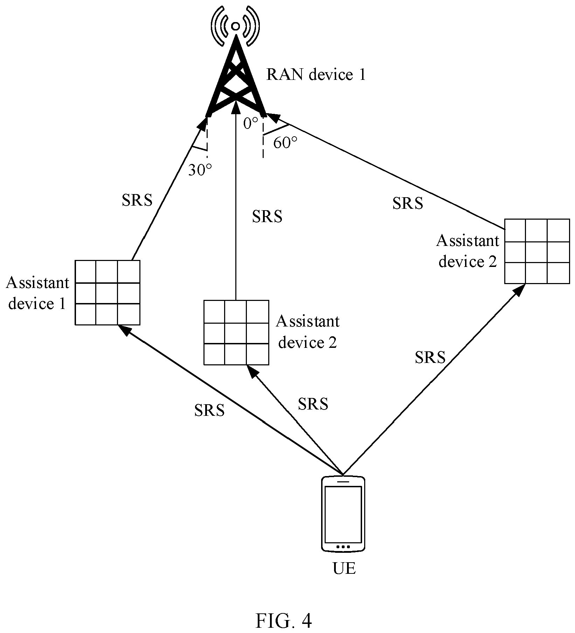

One or more assistant devices (assistant device, AD) may be deployed around the access network device. For example, as shown in FIG. 4, three assistant devices are deployed around a RAN device 1, namely, an assistant device 1, an assistant device 2, and an assistant device 3. Locations of these assistant devices may be fixed. For example, these assistant devices may be fastened to locations around the access network device. Alternatively, the locations of these assistant devices may not be fixed. For example, these assistant devices may be installed on moving objects around the access network device, such as shuttle buses, campus buses, or subways. Alternatively, the locations of these assistant devices and a location of the access network device are fixed relatively. However, regardless of whether the locations of these assistant devices are fixed or relatively fixed, there is a direct path between each of these assistant devices and the access network device, to ensure that the access network device can receive a signal reflected or forwarded by at least one assistant device, for example, an uplink positioning signal. In this way, accuracy and reliability of positioning are ensured. It may be understood that because the plurality of assistant devices are deployed, a probability that there is a direct path between the terminal device and these assistant devices increases greatly, or in other words, there is usually a direct path between each of these assistant devices and the terminal device. In this way, after the terminal device sends uplink positioning signals, at least one of these assistant devices may receive the uplink positioning signal and then send the uplink positioning signal to the access network device, or the at least one assistant device may directly reflect the uplink positioning signal to the access network device, so that the access network device receives at least one uplink positioning signal correspondingly.

It should be noted that an assistant device is merely an example of a name and is not used as a limitation. There may be another name, for example, a reflector, a reflective surface, a positioning assistant, a positioning reflector, a positioning reflective surface, or a reconfigurable intelligent surface (reconfigurable intelligent surface, RIS) wireless network.

S302: The access network device sends a measurement result to an LMF network element. Correspondingly, the LMF network element receives the measurement result from the access network device.

The measurement result may include one or more of the following: RTOA, a TDOA, or information about the at least one assistant device.

The RTOA may be RTOA at which the uplink positioning signal arrives at the access network device after passing through the at least one assistant device, that is, RTOA at which each uplink positioning signal arrives at the access network device after passing through a corresponding assistant device. When the access network device receives at least one uplink positioning signal, the access network device can determine an assistant device from which each uplink positioning signal is, based on a receive angle of each uplink positioning signal, also referred to as an uplink beam angle, and based on information about an angle between the at least one assistant device and the access network device (angle information of the at least one assistant device for short hereinafter). The angle information of the at least one assistant device may be pre-configured locally on the access network device, or may be obtained by the access network device from an operation administration and maintenance (operation administration and maintenance, OAM) device. Angle information of each assistant device is a relative angle between the assistant device and the access network device and is determined by a location of each assistant device. It should be noted that if the location of each assistant device is fixed, a relative angle between each assistant device and the access network device is fixed accordingly; and on the contrary, if the location of each assistant device changes dynamically, the relative angle between each assistant device and the access network device changes accordingly, where in this case, the access network device may update the relative angle of each assistant device in real time based on a change in the location of each assistant device. For example, as shown in FIG. 4, angle information of the assistant device 1 is 30°, angle information of the assistant device 2 is 0°, and angle information of the assistant device 3 is 60°. Based on this, if an uplink beam angle of an SRS is 30°, the RAN device 1 determines that the SRS is from the assistant device 1; if an uplink beam angle of another SRS is 0°, the RAN device 1 determines that the SRS is from the assistant device 2; and if an uplink beam angle of still another SRS is 60°, the RAN device 1 determines that the SRS is from the assistant device 3. On the basis of knowing the assistant device from which each uplink positioning signal is, the access network device can determine, based on a time point at which each uplink positioning signal is received, RTOA at which each uplink positioning signal arrives at the access network device after passing through the corresponding assistant device. For example, as shown in FIG. 4, if a time point at which the SRS from the assistant device 1 is received is T1, the access network device can determine that RTOA1 at which the SRS arrives at the RAN device 1 after passing through the assistant device 1 is T1. If a time point at which the SRS from the assistant device 2 is received is T2, the access network device can determine that RTOA2 at which the SRS arrives at the RAN device 1 after passing through the assistant device 2 is T2. If a time point at which the SRS from the assistant device 3 is received is T3, the access network device can determine that RTOA3 at which the SRS arrives at the RAN device 1 after passing through the assistant device 3 is T3.

Alternatively, the RTOA may be RTOA at which the uplink positioning signal arrives at the at least one assistant device, that is, RTOA at which each uplink positioning signal arrives at the corresponding assistant device. On the basis that the access network device determines the RTOA at which each uplink positioning signal arrives at the access network device after passing through the corresponding assistant device, the access network device can further determine the RTOA at which each uplink positioning signal arrives at the corresponding assistant device, based on signal propagation time between the at least one assistant device and the access network device (signal propagation time for short hereinafter) and a latency of the at least one assistant device. The signal propagation time may be pre-configured locally on the access network device, or may be obtained by the access network device from the OAM device, or may be determined by the access network device based on a distance between the at least one assistant device and the access network device. The distance between the at least one assistant device and the access network device may be pre-configured locally on the access network device, or may be obtained by the access network device from the OAM device. The latency of the at least one assistant device is time required by the at least one assistant device for forwarding or reflecting the uplink positioning signal. The latency of the at least one assistant device may also be pre-configured locally on the access network device, or may be obtained by the access network device from the OAM device. It should be noted that if the location of each assistant device is fixed, a distance and signal propagation time between each assistant device and the access network device are fixed; and on the contrary, if the location of each assistant device changes dynamically, the distance and the signal propagation time between each assistant device and the access network device change accordingly, where the access network device may update the distance and/or the signal propagation time between each assistant device and the access network device in real time based on a change in the location of each assistant device. For example, as shown in FIG. 4, a latency of the assistant device 1 is τ1, and signal propagation time between the assistant device 1 and the RAN device 1 is ΔT1; a latency of the assistant device 2 is τ2, and signal propagation time between the assistant device 2 and the RAN device 1 is ΔT2; and a latency of the assistant device 3 is τ3, and signal propagation time between the assistant device 3 and the RAN device 1 is ΔT3. Based on this, the RAN device 1 determines that RTOA4 at which the SRS arrives at the assistant device 1 is T1-ΔT1-τ1=T4, RTOA5 at which the SRS arrives at the assistant device 2 is T2-ΔT2-τ2=T5, and RTOA5 at which the SRS arrives at the assistant device 3 is T3-ΔT3-τ3=T6.

The TDOA is a TDOA between time at which the uplink positioning signals arrive at the access network device after passing through the different assistant devices, and can be determined based on the RTOA at which the uplink positioning signals arrive at the access network device after passing through the at least one assistant device. For example, as shown in FIG. 4, a TDOA1 between the RTOA1 and the RTOA2 is T1-T2=T7, and a TDOA2 between the RTOA1 and the RTOA3 is T1-T3=T8. Alternatively, the TDOA is a TDOA between time at which the uplink positioning signals arrive at the different assistant devices, and can be determined based on the RTOA at which the uplink positioning signals arrive at the at least one assistant device. For example, as shown in FIG. 4, a TDOA3 between the RTOA4 and the RTOA5 is T4-T5=T9, and a TDOA4 between the RTOA4 and the RTOA6 is T4-T6=T10.

The information about the at least one assistant device may include one or more of the following: an identifier of the at least one assistant device (AD ID), the angle information of the at least one assistant device, a location of the at least one assistant device, the latency of the at least one assistant device, the distance between the at least one assistant device and the access network device, or the signal propagation time.

For the identifier of the at least one assistant device, an identifier of each assistant device may explicitly indicate corresponding RTOA, for example, AD1 {RTOA1}, AD2 {RTOA2}, and AD3 {RTOA3}, or AD1 {RTOA4}, AD2 {RTOA5}, and AD3 {RTOA6}. Alternatively, identifiers of every two assistant devices may explicitly indicate a corresponding TDOA, for example, TDOA1 {AD1, AD2} and TDOA2 {AD1, AD3}, or TDOA3 {AD4, AD5} and TDOA4 {AD4, AD6}. Optionally, the identifier of the at least one assistant device may be a regional identifier or a global identifier. Regional identifiers identify different assistant devices in a region (the region includes at least one cell (cell)). To be specific, identifiers of assistant devices in a region are different, but identifiers of assistant devices in different regions may be the same. For example, a region 1 includes three assistant devices. Identifiers of the three assistant devices in the region 1 may be { AD1} for an assistant device 1, {AD2} for an assistant device 2, and {AD3} for an assistant device 3, and are used to distinguish between the three assistant devices in the region 1. A region 2 includes another three assistant devices. Identifiers of the three assistant devices in the region 2 may be {AD1} for an assistant device 4, {AD2} for an assistant device 5, and {AD3} for an assistant device 6, and are used to distinguish between the three assistant devices in the region 2. Global identifiers identify different assistant devices in all regions. To be specific, identifiers of assistant devices in all regions are different from each other. For example, a region 1 includes three assistant devices, and a region 2 includes another three assistant devices. Identifiers of the three assistant devices in the region 1 may be { AD1} for an assistant device 1, {AD2} for an assistant device 2, and {AD3} for an assistant device 3, and identifiers of the three assistant devices in the region 2 may be {AD4} for an assistant device 4, {AD5} for an assistant device 5, and {AD6} for an assistant device 6. The identifiers are used to distinguish between all the assistant devices in the region 1 and the region 2.

In the measurement result, similar to the identifier of the at least one assistant device, the angle information of each assistant device may implicitly indicate corresponding RTOA, or the angle information of the at least one assistant device may implicitly indicate a corresponding TDOA. For specific indication manners, refer to a related description of the identifier of the at least one assistant device. Details are not described herein again.

The location of the at least one assistant device, the latency of the at least one assistant device, the distance between the at least one assistant device and the access network device, and the signal propagation time are mainly used by the LMF network element for locating the terminal device. If one or more of the location of the at least one assistant device, the latency of the at least one assistant device, the distance between the at least one assistant device and the access network device, and the signal propagation time are pre-configured on the LMF network element or obtained by the LMF network element from the access network device, the measurement result may carry only the identifier or angle information of the at least one assistant device, and no longer carry the one or more pieces of information, to reduce communication overheads and improve communication efficiency. Alternatively, the measurement result may still carry the one or more pieces of information. This is not limited in this application. In this case, the LMF network element can determine, based on the identifiers or angle information of these assistant devices, that the measurement result is related to these assistant devices, and then locate the terminal device based on the one or more pieces of information that are pre-configured locally. In addition, for details about how the one or more pieces of information are pre-configured on the LMF network element or obtained by the LMF network element from the access network device, refer to the following related description of a second possible application scenario. Details are not described herein.

The measurement result may be carried in one or more of the following: a measurement response (measurement response) message or a measurement report (measurement report) message, to implement signaling multiplexing and reduce communication overheads.

Specifically, the information about the at least one assistant device and the RTOA in the measurement result may be carried in any possible information element in a measurement response message or measurement report message, for example, an assistant device RTOA (assistance device RTOA) information element. The example shown in FIG. 4 is used as an example. When the information about the at least one assistant device includes the identifier of the at least one assistant device, an example of the assistant device RTOA information element may be shown in Table 1 below.

**Table 1**

| AD measurements List |
|---|
| >AD Meas Item |
| >>AD ID |
| >>RTOA |

It can be learned based on Table 1 that identifiers of all assistant devices and RTOA corresponding to an identifier of each assistant device in the measurement result can all be carried in an assistant device measurements list (AD measurements List) information element in the assistant device RTOA information element. Specifically, in the assistant device measurements list information element, AD1 and {RTOA1/RTOA4} corresponding to AD1 may be carried in an assistant device measurements item (AD Meas Item) information element 1, AD2 and {RTOA2/RTOA5} corresponding to AD2 may be carried in an assistant device measurements item (AD Meas Item) information element 2, and AD3 and {RTOA3/RTOA6} corresponding to AD3 may be carried in an assistant device measurements item (AD Meas Item) information element 3.

The information about the at least one assistant device and the TDOA in the measurement result may be carried in any possible information element in a measurement response message or measurement report message, for example, an assistant device TDOA (assistance device TDOA) information element. The example shown in FIG. 4 is used as an example. When the information about the at least one assistant device includes the identifier of the at least one assistant device, an example of the assistant device TDOA information element may be shown in Table 2 below.

**Table 2**

| AD measurements List |
|---|
| >AD Meas Item |
| >>AD ID |
| >>AD ID |
| >>TDOA |

It can be learned based on Table 2 that identifiers of all assistant devices and TDOAs corresponding to the identifiers of the assistant devices in the measurement result can all be carried in an assistant device measurements list (AD measurements List) information element in the assistant device TDOA information element. Specifically, in the assistant device measurements list information element, {AD1, AD2} and {TDOA1/TDOA3} corresponding to {AD1, AD2} may be carried in an assistant device measurements item (AD Meas Item) information element 1, and {AD1, AD3} and {TDOA2/TDOA4} corresponding to {AD1, AD3} may be carried in an assistant device measurements item (AD Meas Item) information element 2.

It should be noted that when only one assistant device provides a direct path to the access network device, the access network device can determine only RTOA corresponding to the assistant device but cannot determine a corresponding TDOA. In this case, the measurement result may include only the RTOA corresponding to the assistant device, and optionally, may further include an identifier of the assistant device.

S303: The LMF network element determines a location of the terminal device based on the measurement result.

The identifier or angle information of the at least one assistant device is pre-configured on the LMF network element or obtained by the LMF network element from the access network device, so that the LMF network element can determine an assistant device to which each RTOA in the measurement result corresponds and/or two assistant devices to which each TDOA corresponds. For specific implementation, refer to a related description in S302. Details are not described herein again. After determining the assistant devices to which the RTOA and/or TDOAs correspond, the LMF network element can locate the terminal device based on information about these assistant devices. Details are described below.

Case 1: The measurement result includes RTOA but does not include a TDOA.

If the RTOA in the measurement result is the RTOA at which the uplink positioning signal arrives at the access network device after passing through the at least one assistant device, the LMF network element can determine, based on the latency and signal propagation time of the at least one assistant device, the RTOA at which the uplink positioning signal arrives at the at least one assistant device. Then, based on the RTOA at which the uplink positioning signal arrives at the at least one assistant device, the LMF network element can determine TDOAs between time at which the uplink positioning signals arrive at the different assistant devices, that is, determine TDOAs, and then locate the terminal based on the TDOAs and the location of the at least one assistant device. Alternatively, if the RTOA in the measurement result is the RTOA at which the uplink positioning signal arrives at the at least one assistant device, the LMF network element can determine, based on the RTOA, TDOAs between time at which the uplink positioning signals arrive at the different assistant devices, that is, determine TDOAs, and then locate the terminal device based on the TDOAs and the location of the at least one assistant device. For principles of locating the terminal device by the LMF network element, refer to a related description in "2. Uplink positioning". Details are not described herein again.

Case 2: The measurement result includes TDOAs.

If the TDOAs in the measurement result are TDOAs between time at which the uplink positioning signals arrive at the access network device after passing through the different assistant devices, the LMF network element can determine TDOAs between time at which the uplink positioning signals arrive at the different assistant devices, based on the TDOAs between the time at which the uplink positioning signals reflected or forwarded by the different assistant devices arrive at the access network device, and then locate the terminal based on the TDOAs between the time at which the uplink positioning signals arrive at the different assistant devices and based on the location of the at least one assistant device. The TDOAs between the time at which the uplink positioning signals reflected or forwarded by the different assistant devices arrive at the access network device can be determined based on the TDOAs between the time at which the uplink positioning signals arrive at the access network device after passing through the different assistant devices and based on the signal propagation time. Specific implementation principles are similar to principles of determining a TDOA based on RTOA. Details are not described herein again. Alternatively, if the TDOAs in the measurement result are TDOAs between time at which the uplink positioning signals arrive at the different assistant devices, the LMF network element can locate the terminal device based on the TDOAs and the location of the at least one assistant device. For principles of locating the terminal device by the LMF network element, refer to a related description in "2. Uplink positioning". Details are not described herein again.

It should be noted that if there is only one TDOA in the uplink measurement result, or the LMF network element can determine only one TDOA based on the RTOA in the uplink measurement result, or the uplink measurement result includes only one RTOA, the LMF network element further needs to obtain or determine, based on other measurement results reported by other access network devices, at least two TDOAs between time at which the uplink positioning signals arrive at the other access network devices, assistant devices of the other access network devices, or other TRPs, to locate the terminal device. The other measurement results may include one or more of the following: information about another assistant device, RTOA at which the uplink positioning signal arrives at the another assistant device, RTOA at which the uplink positioning signal arrives at another access network device, RTOA at which the uplink positioning signal arrives at another TRP, RTOA at which the uplink positioning signal arrives at another access network device after passing through another assistant device, a TDOA between time at which the uplink positioning signals arrive at other different access network devices, a TDOA between time at which the uplink positioning signals arrive at other different TRPs, a TDOA between time at which the uplink positioning signals arrive at other different assistant devices, or a TDOA between time at which the uplink positioning signals arrive at another access network device after passing through other different assistant devices. For specific implementation, refer to a related description of the measurement result. Details are not described herein again.

It can be learned that on the basis of obtaining the information about the at least one assistant device, the LMF network element can locate the terminal device not only based on various RTOA but also based on various TDOAs, to implement compatibility between a plurality of positioning manners, and improve flexibility and practical applicability of positioning.

Optionally, in a first possible application scenario, before S302, the communication method in this embodiment of this application may further include the following step.

S304: The LMF network element sends first information to the access network device. Correspondingly, the access network device receives the first information from the LMF network element.

The first information indicates the access network device to report the measurement result. Specifically, the first information specifically indicates the access network device to report the information about the at least one assistant device, and the RTOA or the TDOA. In other words, when there is no first information, the access network device may choose to report the RTOA or the TDOA, or choose to report RTOA at which the uplink positioning signal arrives at the access network device, that is, ordinary RTOA at which the uplink positioning signal arrives at the access network device without passing through the assistant device. However, when the first information exists, the access network device reports RTOA or a TDOA indicated by the first information, that is, performs S303 based on the first information, to implement that the terminal device is located by using the at least one assistant device.

The first information may be carried in an existing NRPPa message, for example, carried in a measurement request (measurement request) message, to implement signaling multiplexing and reduce communication overheads. For example, an example of the measurement request message may be shown in Table 3 or Table 4 below. The first information may be specifically carried in any possible information element in a measurement request message, for example, a TRP measurement type (TRP Measurement Type) information element.

**Table 3**

| TRP Measurement Quantities | |
|---|---|
| >TRP Measurement Type | Assistance device RTOA |

**Table 4**

| TRP Measurement Quantities | |
|---|---|
| >TRP Measurement Type | Assistance device TDOA |

It can be learned based on Table 3 and Table 4 that the TRP measurement type information element may be carried in a TRP measurement quantities (TRP Measurement Quantities) information element. Assistant device RTOA (Assistance device RTOA) or assistant device TDOA (Assistance device TDOA) is indication content of the first information. In other words, if the indication content of the first information is assistant device RTOA, it indicates the access network device to report RTOA. Likewise, if the indication content of the first information is assistant device TDOA, it indicates the access network device to report a TDOA.

Optionally, in the second possible application scenario, before S301 and S304, that is, before measurement for positioning is performed, the communication method in this embodiment of this application may further include the following step.

S305: The access network device sends the information about the at least one assistant device to the LMF network element. Correspondingly, the LMF network element receives the information about the at least one assistant device from the access network device.

The information about the at least one assistant device may include one or more of the following: the identifier of the at least one assistant device, the location of the at least one assistant device, the latency of the at least one assistant device, the angle information of the at least one assistant device, the distance between the at least one assistant device and the access network device, or the signal propagation time. For specific implementation, refer to the related description in S302. Details are not described herein again. In other words, if the information about the at least one assistant device is not configured on the LMF network element in advance, the access network device may send the information about the at least one assistant device to the LMF network element before performing measurement for positioning, so that the LMF network element can locate the terminal device based on the information about the at least one assistant device subsequently. The information about the at least one assistant device may be carried in an existing NRPPa message, for example, a TRP information response (TRP information response) message, to implement signaling multiplexing and reduce communication overheads. For example, an example of the TRP information response message may be shown in Table 5 below. The information about the at least one assistant device may be specifically carried in any possible information element in a TRP information response message, for example, an assistant device information (Assistant Device Information) information element.

**Table 5**

| TRP ID |
|---|
| TRP Information Type |
| >CHOICE TRP Information Item |
| >>Assistance Device information |

It can be learned based on Table 5 that information elements in a TRP information response message include a TRP identifier (TRP ID) information element and a TRP information type (TRP Information Type) information element. The TRP information type includes a TRP information item (TRP Information Item) information element. Based on this, an assistant device information (Assistance Device information) information element may be included in the TRP information item information element.

Further, for the information about the at least one assistant device, the information about each assistant device may be carried in a corresponding assistant device information information element, so that the LMF network element can obtain the information about each assistant device accurately. The example shown in FIG. 4 is used as an example. An example of the assistant device information information element may be shown in Table 6 below.

**Table 6**

| Assistant Device Information |
|---|
| >AD ID |
| >AD coordinate |
| >AD latency |
| >AD angle |
| >AD Distance |
| >AD propagation time |

It can be learned based on Table 6 that an identifier (AD ID), a location (AD coordinate), a latency (AD latency), angle information (AD angle), a distance from the access network device (AD Distance), and signal propagation time (AD propagation time) that are of each assistant device may be carried in a corresponding assistant device information information element. For example, all information about the assistant device 1 is carried in an assistant device information information element 1, all information about the assistant device 2 is carried in an assistant device information information element 2, and all information about the assistant device 3 is carried in an assistant device information information element 3. Certainly, that the information about each assistant device may be carried in a corresponding assistant device information information element is merely an example and is not used as a limitation. For example, information of all assistant devices may be alternatively carried in one assistant device information information element. In addition, it should also be noted that for the plurality of pieces of assistant device information in Table 6, if an assistant device does not have one of the pieces of information, an assistant device information information element may not include the piece of information, or the piece of information exists in the assistant device information information element but is empty.

Optionally, in a third possible application scenario, before S305, the communication method in this embodiment of this application may further include the following step.

S306: The LMF network element sends second information to the access management network element. Correspondingly, the access network device receives the second information from the LMF network element.

The second information indicates the access network device to report the information about the at least one assistant device. In other words, if the LMF network element needs to use an assistant device for positioning, the LMF network element may send the second information to the access network device, so that the access network device reports the information about the at least one assistant device only when being required by the LMF network element, to improve communication efficiency. The second information may be carried in an existing NRPPa message, for example, a TRP information request (TRP information request) message, to implement signaling multiplexing and reduce communication overheads. For example, an example of the TRP information request message may be shown in Table 7 below. The second information may be specifically carried in any possible information element in a TRP information request message, for example, a TRP information type (TRP Information Type) information element.

**Table 7**

| TRP Information Type List | |
|---|---|
| >TRP Information Type Item | |
| >>TRP Information Type | Assistant Device Information |

It can be learned based on Table 7 that a TRP information type item (TRP Information Type) information element is carried in a TRP information type list (TRP Information Type List) information element, and the TRP information type (TRP Information Type) information element is carried in the TRP information type item information element. Assistant device information (Assistant Device Information) is indication content of the second information. In other words, by using the indication content of the second information, the access network device may be indicated to report the information about the assistant device.

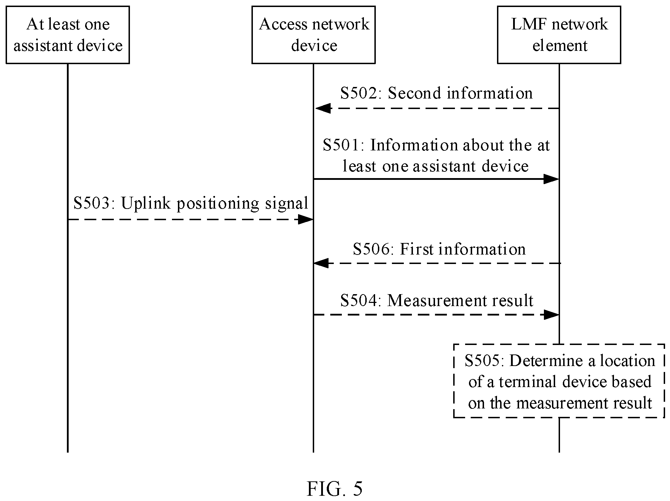

For example, FIG. 5 is a schematic flowchart 2 of a communication method according to an embodiment of this application. The communication method may be applicable to communication between the access network devices and the LMF network element in the network architecture shown in FIG. 1. As shown in FIG. 5, the communication method includes the following steps.

S501: An access network device sends information about at least one assistant device to an LMF network element. Correspondingly, the LMF network element receives the information about the at least one assistant device from the access network device.

The information about the at least one assistant device is used by the LMF network element for determining a location of a terminal device. The at least one assistant device is configured to reflect or forward an uplink positioning signal from the terminal device. The information about the at least one assistant device may be carried in a TRP information response message. The information about the at least one assistant device may include one or more of the following: an identifier of the at least one assistant device, a location of the at least one assistant device, a latency of the at least one assistant device, information about an angle between the at least one assistant device and the access network device, a distance between the at least one assistant device and the access network device, or signal propagation time between the at least one assistant device and the access network device. For specific implementation, refer to related descriptions in S302 and S305. Details are not described herein again.

Optionally, in a first possible implementation scenario, before S501, the communication method in this embodiment of this application may further include the following step.

S502: The LMF network element sends second information to the access network device. Correspondingly, the access network device receives the second information from the LMF network element.

The second information may indicate the access network device to report the information about the at least one assistant device, and may be carried in a TRP information request message. For specific implementation, refer to a related description in S306. Details are not described herein again.

Optionally, in a second possible implementation scenario, after S502, the communication method in this embodiment of this application may further include the following steps.

S503: The access network device receives an uplink positioning signal from the at least one assistant device.

S504: The access network device sends a measurement result to the LMF network element. Correspondingly, the LMF network element receives the measurement result from the access network device.

S505: The LMF network element determines the location of the terminal device based on the measurement result.

There is a direct path between the at least one assistant device and the access network device. The uplink positioning signal is an uplink positioning signal sent by the terminal device. The measurement result is determined based on the uplink positioning signal. The measurement result may be carried in one or more of the following: a measurement response message or a measurement report message. The measurement result may include one or more of the following: the information about the at least one assistant device, RTOA, or a TDOA. The RTOA may be RTOA at which the uplink positioning signal arrives at the at least one assistant device, or the RTOA may be RTOA at which the uplink positioning signal arrives at the access network device after passing through the at least one assistant device. The TDOA may be a TDOA between time at which the uplink positioning signals arrive at the different assistant devices, or the TDOA may be a TDOA between time at which the uplink positioning signals arrive at the access network device after passing through the different assistant devices. It may be understood that for specific implementation of S503 to S505, reference may be made to related descriptions in S301 to S303. Details are not described herein again.

Optionally, in a third possible implementation scenario, before S504, the communication method in this embodiment of this application may further include the following step.

S506: The LMF network element sends first information to the access network device. Correspondingly, the access network device receives the first information from the LMF network element.

The first information indicates the access network device to report the measurement result, and may be carried in a measurement request message. For specific implementation, refer to a related description in S304. Details are not described herein again.

In conclusion, it can be learned based on the methods shown in FIG. 3 and FIG. 5 that at least one assistant device is disposed between the terminal device and the access network device, and when there is no direct path between the terminal device and the access network device, the at least one assistant device can reflect or forward the uplink positioning signal sent by the terminal device, so that the access network device can receive the uplink positioning signal, implementing accurate positioning of the terminal device.

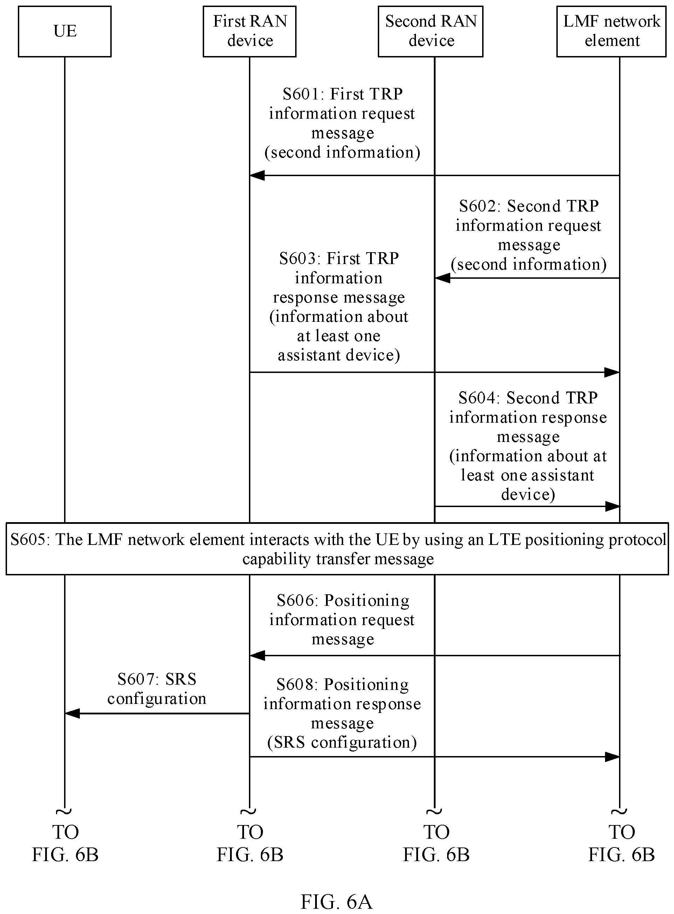

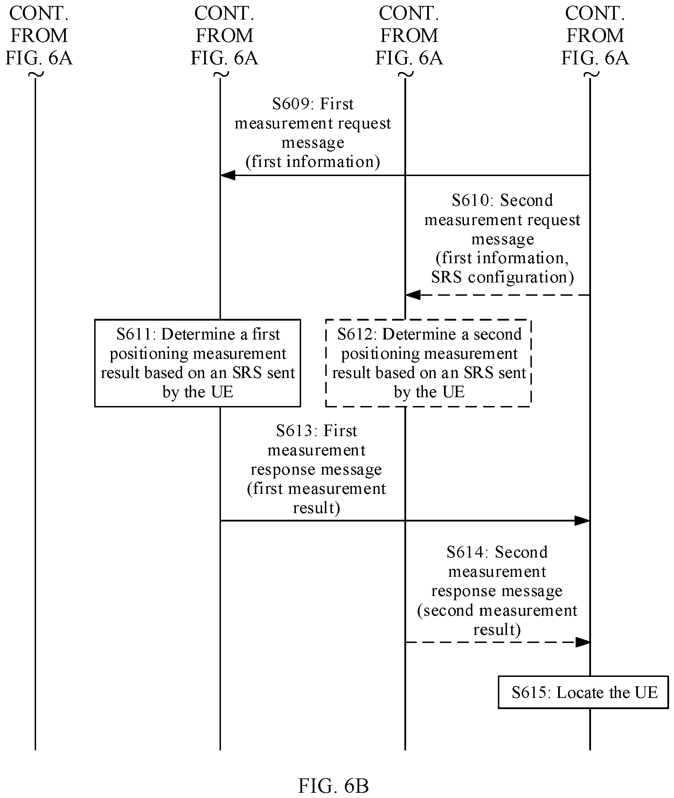

The foregoing describes, with reference to FIG. 3 to FIG. 5, implementation principles of the communication methods provided in embodiments of this application. The following describes, with reference to FIG. 6A and FIG. 6B, procedures of a communication method provided in an embodiment of this application in a specific application scenario.

For example, FIG. 6A and FIG. 6B are schematic flowcharts 3 of a communication method according to an embodiment of this application. As shown in FIG. 6A and FIG. 6B, the communication method may include the following steps.

S601: An LMF network element sends a first TRP information request message to a first RAN device. Correspondingly, the first RAN device receives the first TRP information request message from the LMF network element.

S602: The LMF network element sends a second TRP information request message to a second RAN device. Correspondingly, the second RAN device receives the second TRP information request message from the LMF network element.

The first TRP information request message and the second TRP information request message may both carry second information; and indicate the first RAN device to report information about at least one assistant device of the first RAN device, and indicate the second RAN device to report information about at least one assistant device of the second RAN device. For specific implementation, refer to a related description in the third possible application scenario. Details are not described herein again.

S603: The first RAN device sends a first TRP information response message to the LMF network element. Correspondingly, the LMF network element receives the first TRP information request message from the first RAN device.

S604: The second RAN device sends a second TRP information response message to the LMF network element. Correspondingly, the LMF network element receives the second TRP information request message from the second RAN device.

The first TRP information response message may carry the information about the at least one assistant device of the first RAN device. The second TRP information response message may carry the information about the at least one assistant device of the second RAN device. For specific implementation, refer to a related description in the second possible application scenario. Details are not described herein again.

S605: The LMF network element interacts with UE by using an LTE positioning protocol (LTE positioning protocol, LPP) capability transfer (capability transfer) message.

The LMF network element may interact with the UE by using the LTE positioning protocol capability transfer message, obtaining a report on capabilities of the UE, for example, a positioning technology supported by the UE. It should be noted that none of an order in which S605 and S601 to S604 are performed, an order in which S601 and S602 are performed, and an order in which S603 and S604 are performed is limited.

S606: The LMF network element sends a positioning information request (positioning information request) message to the first RAN device. Correspondingly, the first RAN device receives the positioning information request message from the LMF network element.

The positioning information request message requests positioning information of the UE, for example, an SRS configuration, from the first RAN device that serves the UE.

S607: The first RAN device sends the SRS configuration to the UE. Correspondingly, the UE receives the SRS configuration from the first RAN device.

The SRS configuration is used by the terminal for sending an SRS, for example, including a bandwidth and a cycle required for sending the SRS.

S608: The first RAN device sends a positioning information response (positioning information response) message to the LMF network element. Correspondingly, the LMF network element receives the positioning information response message from the first RAN device.

The positioning information response message carries the SRS configuration.

S609: The LMF network element sends a first measurement request message to the first RAN device. Correspondingly, the first RAN device receives the first measurement request message from the LMF network element.

The first measurement request message may carry first information, and indicates the first RAN device to report a measurement result related to the assistant device. For specific implementation, refer to a related description in the first possible application scenario. Details are not described herein again.

S610: The LMF network element sends a second measurement request message to the second RAN device. Correspondingly, the second RAN device receives the second measurement request message from the LMF network element.

The second RAN device is a RAN device that participates in uplink positioning of the UE, and may be located near the UE. The second measurement request message may carry not only the SRS configuration but also the first information, and indicates the second RAN device to report a measurement result related to the assistant device. For specific implementation, also refer to the related description in the first possible application scenario. Details are not described herein again. It may be understood:

S611: The first RAN device determines a first measurement result based on the SRS sent by the UE.

S612: The second RAN device determines a second measurement result based on the SRS sent by the UE.

For specific implementation of S611 and S612, refer to related descriptions in S301 and S302. Details are not described herein again.

S613: The first RAN device sends a first measurement response message to the LMF network element. Correspondingly, the LMF network element receives the first measurement response message from the first RAN device.

S614: The second RAN device sends a second measurement response message to the LMF network element. Correspondingly, the LMF network element receives the second measurement response message from the second RAN device.

The first measurement response message carries the first measurement result. The second measurement response message carries the second measurement result. For specific implementation, refer to the related description in S302. Details are not described herein again.

It may be understood that S610, S612, and S614 are optional steps. To be specific, if a quantity of the at least one assistant device of the first RAN device can meet a requirement of uplink positioning of the UE, for example, there are three, four, or five assistant devices, the second RAN device does not need to participate in uplink positioning of the UE, and S610, S612, and S614 do not need to be performed. On the contrary, if the quantity of the at least one assistant device of the first RAN device cannot meet the requirement of uplink positioning of the UE, for example, there is one or two assistant devices, the second RAN device needs to participate in uplink positioning of the UE, and therefore S610, S612, and S614 need to be performed. In addition, none of an order in which S609 and S610 are performed, an order in which S611 and S612 are performed, and an order in which S613 and S614 are performed is limited.

S615: The LMF network element locates the UE.

For specific implementation of S615, refer to a related description in S303. Details are not described herein again.

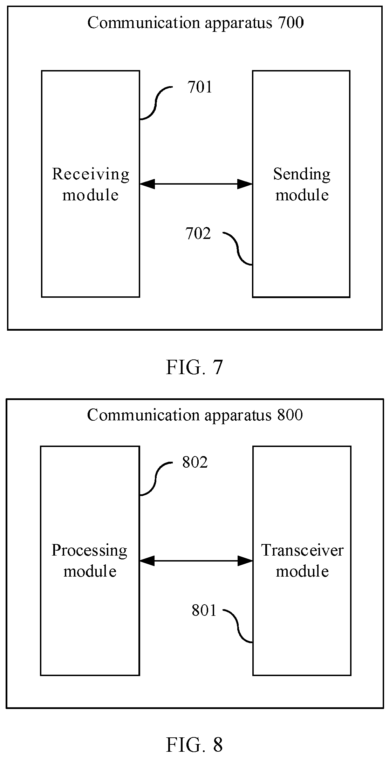

The foregoing describes, in detail with reference to FIG. 3 to FIG. 6B, the communication methods provided in embodiments of this application. The following describes, in detail with reference to FIG. 7 to FIG. 9, communication apparatuses that are configured to perform the communication methods provided in embodiments of this application.

For example, FIG. 7 is a schematic diagram 1 of a structure of a communication apparatus according to an embodiment of this application. As shown in FIG. 7, the communication apparatus 700 may be applicable to the network architecture shown in FIG. 1, and includes a receiving module 701 and a sending module 702.

In some embodiments, the communication apparatus 700 may perform some functions of the access network device in the method shown in FIG. 3, or perform some functions of the first RAN device/second RAN device in the method shown in FIG. 6A and FIG. 6B.

The receiving module 701 is configured to receive an uplink positioning signal from at least one assistant device. The sending module 702 is configured to send a measurement result to an LMF network element. The uplink positioning signal is an uplink positioning signal sent by a terminal device. The measurement result is determined based on the uplink positioning signal.

In a possible design solution, the measurement result may include one or more of the following: information about the at least one assistant device, RTOA, or a TDOA.

Optionally, the RTOA is RTOA at which the uplink positioning signal arrives at the at least one assistant device, or the RTOA is RTOA at which the uplink positioning signal arrives at the communication apparatus 700 after passing through the at least one assistant device.

Optionally, the TDOA is a TDOA between time at which the uplink positioning signals arrive at the different assistant devices, or the TDOA is a TDOA between time at which the uplink positioning signals arrive at the communication apparatus 700 after passing through the different assistant devices.

In a possible design solution, the measurement result may be carried in one or more of the following: a measurement response message or a measurement report message.

In a possible design solution, the receiving module 701 is further configured to: before the sending module 702 sends the measurement result to the LMF network element, receive first information from the LMF network element. The first information indicates the communication apparatus 700 to report the measurement result.

Optionally, the first information may be carried in a measurement request message.

In a possible design solution, the sending module 702 is further configured to send the information about the at least one assistant device to the LMF network element.

Optionally, the information about the at least one assistant device may be carried in a TRP information response message.

Optionally, the information about the at least one assistant device may include one or more of the following: an identifier of the at least one assistant device, a location of the at least one assistant device, a latency of the at least one assistant device, information about an angle between the at least one assistant device and the communication apparatus 700, a distance between the at least one assistant device and the communication apparatus 700, or signal propagation time between the at least one assistant device and the communication apparatus 700.

Optionally, the receiving module 701 is further configured to: before the sending module 702 sends the information about the at least one assistant device to the LMF network element, receive second information from the LMF network element. The second information indicates the communication apparatus 700 to report the information about the at least one assistant device.

Optionally, the second information may be carried in a TRP information request message.

In a possible design solution, there is a direct path between the at least one assistant device and the communication apparatus 700.

The sending module 702 and the receiving module 701 may be alternatively integrated to form a module, for example, a transceiver module (not shown in FIG. 7). The transceiver module is configured to implement transmission and reception functions of the communication apparatus 700.

Optionally, the communication apparatus 700 may further include a processing module (not shown in FIG. 7). The processing module is configured to implement functions of the access network device in the method shown in FIG. 3 other than transmission and reception functions, or implement functions of the first RAN device/second RAN device in the method shown in FIG. 6A and FIG. 6B other than transmission and reception functions.

Optionally, the communication apparatus 700 may further include a storage module (not shown in FIG. 7). The storage module stores a program or instructions. When the processing module executes the program or instructions, the communication apparatus 700 is enabled to perform functions of the access network device in the method shown in FIG. 3, or perform functions of the first RAN device/second RAN device in the method shown in FIG. 6A and FIG. 6B.

It should be understood that the processing module in the communication apparatus 700 may be implemented by a processor or a processor-related circuit component or may be a processor or a processing unit, and the transceiver module may be implemented by a transceiver or a transceiver-related circuit component or may be a transceiver or a transceiver unit.

It should be noted that the communication apparatus 700 may be a network device, for example, an access network device, or may be a chip (system) or another part or component that can be disposed in the network device, or may be an apparatus including the network device. This is not limited in this application.

In addition, for technical effects of the communication apparatus 700, refer to technical effects corresponding to the method shown in FIG. 3. Details are not described herein again.

In some other embodiments, the communication apparatus 700 may perform some functions of the access network device in the method shown in FIG. 5, or perform some functions of the first RAN device/second RAN device in the method shown in FIG. 6A and FIG. 6B.

The sending module 702 is configured to send information about at least one assistant device to an LMF network element. The information about the at least one assistant device is used by the LMF network element for determining a location of a terminal device. The at least one assistant device is configured to reflect or forward an uplink positioning signal from the terminal device.

Optionally, the information about the at least one assistant device may be carried in a TRP information response message.

Optionally, the information about the at least one assistant device may include one or more of the following: an identifier of the at least one assistant device, a location of the at least one assistant device, a latency of the at least one assistant device, information about an angle between the at least one assistant device and the communication apparatus 700, a distance between the at least one assistant device and the communication apparatus 700, or signal propagation time between the at least one assistant device and the communication apparatus 700.

Optionally, the receiving module 701 is configured to: before the sending module 702 sends the information about the at least one assistant device to the LMF network element, receive second information from the LMF network element. The second information indicates the communication apparatus 700 to report the information about the at least one assistant device.

Optionally, the second information may be carried in a TRP information request message.

In a possible design solution, the receiving module 701 is configured to receive an uplink positioning signal from the at least one assistant device. The sending module 702 is further configured to send a measurement result to the LMF network element. The uplink positioning signal is an uplink positioning signal sent by the terminal device. The measurement result is determined based on the uplink positioning signal.

In a possible design solution, the measurement result may include one or more of the following: the information about the at least one assistant device, RTOA, or a TDOA.

Optionally, the RTOA is RTOA at which the uplink positioning signal arrives at the at least one assistant device, or the RTOA is RTOA at which the uplink positioning signal arrives at the communication apparatus 700 after passing through the at least one assistant device.

Optionally, the TDOA is a TDOA between time at which the uplink positioning signals arrive at the different assistant devices, or the TDOA is a TDOA between time at which the uplink positioning signals arrive at the communication apparatus 700 after passing through the different assistant devices.

In a possible design solution, the measurement result may be carried in one or more of the following: a measurement response message or a measurement report message.

In a possible design solution, the receiving module 701 is configured to: before the sending module 702 sends the measurement result to the LMF network element, receive first information from the LMF network element. The first information indicates the communication apparatus 700 to report the measurement result.

Optionally, the first information may be carried in a measurement request message.

In a possible design solution, there is a direct path between the at least one assistant device and the communication apparatus 700.

The sending module 702 and the receiving module 701 may be alternatively integrated to form a module, for example, a transceiver module (not shown in FIG. 7). The transceiver module is configured to implement transmission and reception functions of the communication apparatus 700.

Optionally, the communication apparatus 700 may further include a processing module (not shown in FIG. 7). The processing module is configured to implement functions of the access network device in the method shown in FIG. 5 other than transmission and reception functions, or implement functions of the first RAN device/second RAN device in the method shown in FIG. 6A and FIG. 6B other than transmission and reception functions.

Optionally, the communication apparatus 700 may further include a storage module (not shown in FIG. 7). The storage module stores a program or instructions. When the processing module executes the program or instructions, the communication apparatus 700 is enabled to perform functions of the access network device in the method shown in FIG. 5, or perform functions of the first RAN device/second RAN device in the method shown in FIG. 6A and FIG. 6B.

It should be understood that the processing module in the communication apparatus 700 may be implemented by a processor or a processor-related circuit component or may be a processor or a processing unit, and the transceiver module may be implemented by a transceiver or a transceiver-related circuit component or may be a transceiver or a transceiver unit.

It should be noted that the communication apparatus 700 may be a network device, for example, an access network device, or may be a chip (system) or another part or component that can be disposed in the network device, or may be an apparatus including the network device. This is not limited in this application.

In addition, for technical effects of the communication apparatus 700, refer to technical effects corresponding to the method shown in FIG. 5. Details are not described herein again.

For example, FIG. 8 is a schematic diagram 2 of a structure of a communication apparatus according to an embodiment of this application. As shown in FIG. 8, the communication apparatus 800 may be applicable to the network architecture shown in FIG. 1, and includes a transceiver module 801 and a processing module 802.

In some embodiments, the communication apparatus 800 may perform some functions of the LMF network element in the method shown in FIG. 3, or perform some functions of the LMF network element in the method shown in FIG. 6A and FIG. 6B.

The transceiver module 801 is configured to receive a measurement result from an access network device. The processing module 802 is configured to determine a location of a terminal device based on the measurement result. The measurement result includes information about at least one assistant device. The at least one assistant device is configured to reflect or forward an uplink positioning signal from the terminal device.

In a possible design solution, the measurement result may include one or more of the following: the information about the at least one assistant device, relative time of arrival RTOA, or a time difference of arrival TDOA.

Optionally, the RTOA is RTOA at which the uplink positioning signal arrives at the at least one assistant device, or the RTOA is RTOA at which the uplink positioning signal arrives at the access network device after passing through the at least one assistant device.

Optionally, the TDOA is a TDOA between time at which the uplink positioning signals arrive at the different assistant devices, or the TDOA is a TDOA between time at which the uplink positioning signals arrive at the access network device after passing through the different assistant devices.

In a possible design solution, the measurement result may be carried in one or more of the following: a measurement response message or a measurement report message.

In a possible design solution, the transceiver module 801 is further configured to: before receiving the measurement result from the access network device, send first information to the access network device. The first information indicates the access network device to report the measurement result.

Optionally, the first information may be carried in a measurement request message.

In a possible design solution, the transceiver module 801 is further configured to receive the information about the at least one assistant device from the access network device.

Optionally, the information about the at least one assistant device may be carried in a transmission reception point TRP information response message.

Optionally, the information about the at least one assistant device includes one or more of the following: an identifier of the at least one assistant device, a location of the at least one assistant device, a latency of the at least one assistant device, information about an angle between the at least one assistant device and the access network device, a distance between the at least one assistant device and the access network device, or signal propagation time between the at least one assistant device and the access network device.

In a possible design solution, the transceiver module 801 is further configured to: before receiving the information about the at least one assistant device from the access network device, send second information to the access network device. The second information indicates the access network device to report the information about the at least one assistant device.

Optionally, the seventh information is carried in a TRP information request message.

Optionally, the transceiver module 801 may alternatively include a sending module and a receiving module (not shown in FIG. 8). The sending module is configured to implement a transmission function of the communication apparatus 800. The receiving module is configured to implement a reception function of the communication apparatus 800.

Optionally, the communication apparatus 800 may further include a storage module (not shown in FIG. 8). The storage module stores a program or instructions. When the processing module 802 executes the program or instructions, the communication apparatus 800 is enabled to perform functions of the LMF network element in the method shown in FIG. 3, or perform functions of the LMF network element in the method shown in FIG. 6A and FIG. 6B.

It should be understood that the processing module in the communication apparatus 800 may be implemented by a processor or a processor-related circuit component or may be a processor or a processing unit, and the transceiver module may be implemented by a transceiver or a transceiver-related circuit component or may be a transceiver or a transceiver unit.

It should be noted that the communication apparatus 800 may be a network device, for example, an LMF network element, or may be a chip (system) or another part or component that can be disposed in the network device, or may be an apparatus including the network device. This is not limited in this application.

In addition, for technical effects of the communication apparatus 800, refer to technical effects corresponding to the method shown in FIG. 3. Details are not described herein again.

In some other embodiments, the communication apparatus 800 may perform some functions of the LMF network element in the method shown in FIG. 5, or perform some functions of the LMF network element in the method shown in FIG. 6A and FIG. 6B.

The transceiver module 801 is configured to receive information about at least one assistant device from an access network device. The information about the at least one assistant device is used by the communication apparatus according to the ninth aspect for determining a location of a terminal device. The at least one assistant device is configured to reflect or forward an uplink positioning signal from the terminal device.

Optionally, the information about the at least one assistant device may be carried in a TRP information response message.

Optionally, the information about the at least one assistant device may include one or more of the following: an identifier of the at least one assistant device, a location of the at least one assistant device, a latency of the at least one assistant device, information about an angle between the at least one assistant device and the access network device, a distance between the at least one assistant device and the access network device, or signal propagation time between the at least one assistant device and the access network device.

Optionally, the transceiver module 801 is further configured to: before receiving the information about the at least one assistant device from the access network device, send second information to the access network device. The second information indicates the access network device to report the information about the at least one assistant device.

Optionally, the second information may be carried in a TRP information request message.

In a possible design solution, the transceiver module 801 is further configured to receive a measurement result from the access network device, and the processing module 802 is configured to determine the location of the terminal device based on the measurement result. The measurement result includes the information about the at least one assistant device. The at least one assistant device is configured to reflect or forward an uplink positioning signal from the terminal device.

In a possible design solution, the measurement result may include one or more of the following: the information about the at least one assistant device, RTOA, or a TDOA.

Optionally, the RTOA is RTOA at which the uplink positioning signal arrives at the at least one assistant device, or the RTOA is RTOA at which the uplink positioning signal arrives at the access network device after passing through the at least one assistant device.

Optionally, the TDOA is a TDOA between time at which the uplink positioning signals arrive at the different assistant devices, or the TDOA is a TDOA between time at which the uplink positioning signals arrive at the access network device after passing through the different assistant devices.

In a possible design solution, the measurement result may be carried in one or more of the following: a measurement response message or a measurement report message.

In a possible design solution, the transceiver module 801 is further configured to: before receiving the measurement result from the access network device, send first information to the access network device. The first information indicates the access network device to report the measurement result.

Optionally, the first information may be carried in a measurement request message.

Optionally, the transceiver module 801 may alternatively include a sending module and a receiving module (not shown in FIG. 8). The sending module is configured to implement a transmission function of the communication apparatus 800. The receiving module is configured to implement a reception function of the communication apparatus 800.

Optionally, the communication apparatus 800 may further include a storage module (not shown in FIG. 8). The storage module stores a program or instructions. When the processing module 802 executes the program or instructions, the communication apparatus 800 is enabled to perform functions of the LMF network element in the method shown in FIG. 5, or perform functions of the LMF network element in the method shown in FIG. 6A and FIG. 6B.

It should be understood that the processing module in the communication apparatus 800 may be implemented by a processor or a processor-related circuit component or may be a processor or a processing unit, and the transceiver module may be implemented by a transceiver or a transceiver-related circuit component or may be a transceiver or a transceiver unit.

It should be noted that the communication apparatus 800 may be a network device, for example, an LMF network element, or may be a chip (system) or another part or component that can be disposed in the network device, or may be an apparatus including the network device. This is not limited in this application.

In addition, for technical effects of the communication apparatus 800, refer to technical effects corresponding to the method shown in FIG. 5. Details are not described herein again.

In still some other embodiments, the communication apparatus 800 may perform some functions of the assistant device in the method shown in FIG. 5.

The transceiver module 801 is configured to: receive an uplink positioning signal from a terminal device, and send the uplink positioning signal to an access network device. Alternatively, the transceiver module 801 is configured to reflect, to the access network device, the uplink positioning signal from the terminal device.

Optionally, the transceiver module 801 may alternatively include a sending module and a receiving module (not shown in FIG. 8). The sending module is configured to implement a transmission function of the communication apparatus 800. The receiving module is configured to implement a reception function of the communication apparatus 800.

The communication apparatus 800 may further include the processing module 802. The processing module 802 is configured to implement a processing function of the apparatus.

Optionally, the communication apparatus 800 may further include a storage module (not shown in FIG. 8). The storage module stores a program or instructions. When the processing module 802 executes the program or instructions, the communication apparatus 800 is enabled to perform some functions of the assistant device in the method shown in FIG. 5.

It should be understood that the processing module in the communication apparatus 800 may be implemented by a processor or a processor-related circuit component or may be a processor or a processing unit, and the transceiver module may be implemented by a transceiver or a transceiver-related circuit component or may be a transceiver or a transceiver unit.

It should be noted that the communication apparatus 800 may be a network device, for example, an assistant device, or may be a chip (system) or another part or component that can be disposed in the network device, or may be an apparatus including the network device. This is not limited in this application.

In addition, for technical effects of the communication apparatus 800, refer to technical effects corresponding to the method shown in FIG. 5. Details are not described herein again.

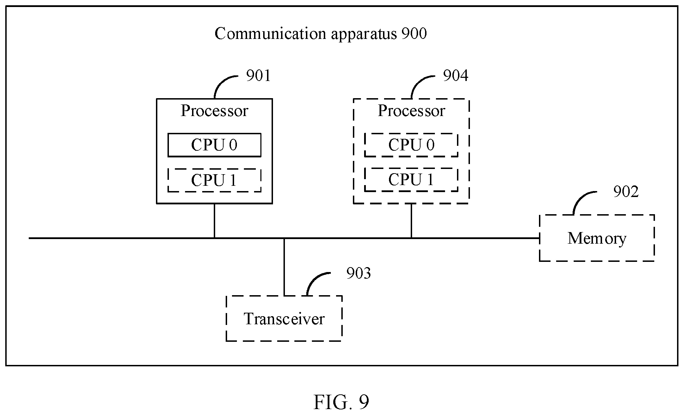

For example, FIG. 9 is a schematic diagram 3 of a structure of a communication apparatus according to an embodiment of this application. The communication apparatus may be a terminal device or a network device, or may be a chip (system) or another part or component that can be disposed in the terminal device or the network device. As shown in FIG. 9, the communication apparatus 900 may include a processor 901. Optionally, the communication apparatus 900 may further include a memory 902 and/or a transceiver 903. The processor 901 is coupled to the memory 902 and the transceiver 903, for example, may be connected by using a communication bus.

The following specifically describes constituent parts of the communication apparatus 900 with reference to FIG. 9.

The processor 901 is a control center of the communication apparatus 900; and may be one processor, or may be a general term for a plurality of processing elements, or may be referred to as a logic circuit. For example, the processor 901 is one or more central processing units (central processing unit, CPU), or may be an application-specific integrated circuit (application-specific integrated circuit, ASIC), or may be one or more integrated circuits configured to implement embodiments of this application, for example, one or more microprocessors (digital signal processor, DSP), or one or more field programmable gate arrays (field programmable gate array, FPGA).

Optionally, the processor 901 may perform functions of the network device in the method shown in FIG. 3, FIG. 5, or FIG. 6A and FIG. 6B, for example, the access network device or the LMF network element, by running or executing a software program stored in the memory 902 and invoking data stored in the memory 902.

During specific implementation, in an embodiment, the processor 901 may include one or more CPUs, for example, a CPU 0 and a CPU 1 shown in FIG. 9.

During specific implementation, in an embodiment, the communication apparatus 900 may alternatively include a plurality of processors, for example, the processor 901 and a processor 904 shown in FIG. 9. Each of these processors may be a single-core (single-CPU) processor or a multi-core (multi-CPU) processor. The processor herein may be one or more devices, circuits, and/or processing cores configured to process data (for example, a computer program or instructions).

The memory 902 is configured to store a software program that executes the solutions in this application, and is controlled by the processor 901 so that functions of the network device in the method shown in FIG. 3 or FIG. 5 are performed.

Optionally, the memory 902 may be a read-only memory (read-only memory, ROM) or another type of static storage device capable of storing static information and instructions, or a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compressed optical disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer. However, the memory 902 is not limited thereto. The memory 902 may be integrated with the processor 901, or may stand alone and be coupled to the processor 901 by using an interface circuit or an input/output interface (not shown in FIG. 9) of the communication apparatus 900. This is not specifically limited in this embodiment of this application.

The transceiver 903 is configured to communicate with another communication apparatus. For example, when the communication apparatus 900 is a terminal, the transceiver 903 may be configured to communicate with a network device or another terminal device. For another example, when the communication apparatus 900 is a network device, the transceiver 903 may be configured to communicate with a terminal or another network device.

Optionally, the transceiver 903 may include a receiver and a transmitter (not shown separately in FIG. 9). The receiver is configured to implement a reception function. The transmitter is configured to implement a transmission function.

Optionally, the transceiver 903 may be integrated with the processor 901, or may stand alone and be coupled to the processor 901 by using the interface circuit (not shown in FIG. 9) of the communication apparatus 900. This is not specifically limited in this embodiment of this application.

It should be noted that the structure of the communication apparatus 900 shown in FIG. 9 does not constitute a limitation on the communication apparatus. An actual communication apparatus may include more or fewer components than those shown in the figure, or combine some components, or have different component arrangements.

In addition, for technical effects of the communication apparatus 900, refer to the technical effects of the communication methods in the foregoing method embodiments. Details are not described herein again.

An embodiment of this application provides a communication system. The communication system includes the foregoing one or more terminals and one or more network devices.

It should be understood that the processor in embodiments of this application may be a CPU, and the processor may alternatively be another general-purpose processor, a DSP, an ASIC, a field programmable gate array FPGA or another programmable logic device, a discrete gate or transistor logic device, a discrete hardware component, or the like. The general-purpose processor may be a microprocessor, or the processor may be any conventional processor, or the like.

It should be further understood that the memory in embodiments of this application may be a volatile memory or a nonvolatile memory, or may include both a volatile memory and a nonvolatile memory. The nonvolatile memory may be a ROM, a programmable read-only memory (programmable ROM, PROM), an erasable programmable read-only memory (erasable PROM, EPROM), an EEPROM, or a flash memory. The volatile memory may be a RAM, used as an external cache. Through illustrative but not restrictive descriptions, RAMs in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware (for example, a circuit), firmware, or any combination thereof. When being implemented by using software, the foregoing embodiments may be implemented completely or partially in a form of a computer program product. The computer program product includes one or more computer instructions or computer programs. When the computer instructions, the computer programs, or instructions are loaded or executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be sent from one computer-readable storage medium to another. For example, the computer instructions may be sent from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes merely an association relationship between associated objects, and indicates that three relationships may exist. For example, A and/or B may indicate the following three cases: Only A exists, both A and B exist, and only B exists, where A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "at least one of the following items (pieces)" or a similar expression thereof indicates any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

It should be understood that the sequence numbers of the foregoing procedures do not mean execution orders in various embodiments of this application. Execution orders of the procedures should be determined based on functions and internal logic of the procedures, and shall not constitute any limitation on implementation processes of embodiments of this application.

A person of ordinary skill in the art may be aware that in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that for the purpose of convenient and brief description, for a specific work process of the system, apparatus, and unit described above, reference may be made to a corresponding process in the foregoing method embodiments. Details are not described herein again.

In the several embodiments provided in this application, it should be understood that the disclosed system, apparatuses, and methods may be implemented in other manners. For example, the described apparatus embodiments are merely examples. For example, division into the units is merely logical function division. During actual implementation, another division manner may be used. For example, a plurality of units or components may be combined or integrated into another system, or some features may be ignored or may not be performed. In addition, the displayed or discussed mutual couplings or direct couplings or communication connections may be implemented by using some interfaces. The indirect couplings or communication connections between the apparatuses or units may be implemented in an electrical form, a mechanical form, or another form.

The units described as separate parts may or may not be physically separate, and parts displayed as units may or may not be physical units, that is, may be located in one location, or may be distributed on a plurality of network units. Some or all of the units may be selected based on actual requirements to achieve the objectives of the solutions in embodiments.

In addition, functional units in embodiments of this application may be integrated in one processing unit, each of the units may stand alone physically, or two or more units may be integrated in one unit.

If the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, a network device, or the like) to perform all or some of the steps of the methods described in embodiments of this application. The storage medium includes any medium that can store program code, such as a USB flash drive, a removable hard disk, a ROM, a RAM, a magnetic disk, or a compact disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
receiving, by an access network device, an uplink positioning signal from at least one assistant device, wherein the uplink positioning signal is an uplink positioning signal sent by a terminal device; and
sending, by the access network device, a measurement result to a location management function LMF network element, wherein the measurement result is determined based on the uplink positioning signal.

2. The method according to claim 1, wherein before the sending, by the access network device, a measurement result to an LMF network element, the method further comprises:
receiving, by the access network device, first information from the LMF network element, wherein the first information indicates the access network device to report the measurement result.

3. The method according to claim 1, wherein the method further comprises:
sending, by the access network device, information about the at least one assistant device to the LMF network element.

4. The method according to claim 3, wherein before the sending, by the access network device, information about the at least one assistant device to the LMF network element, the method further comprises:
receiving, by the access network device, second information from the LMF network element, wherein the second information indicates the access network device to report the information about the at least one assistant device.

5. A communication method, wherein the method comprises:
receiving, by an LMF network element, a measurement result from an access network device, wherein the measurement result comprises information about at least one assistant device, and the at least one assistant device is configured to reflect or forward an uplink positioning signal from a terminal device; and
determining, by the LMF network element, a location of the terminal device based on the measurement result.

6. The method according to claim 1 or 5, wherein the measurement result comprises one or more of the following: the information about the at least one assistant device, relative time of arrival RTOA, or a time difference of arrival TDOA.

7. The method according to claim 6, wherein the information about the at least one assistant device comprises one or more of the following: an identifier of the at least one assistant device, a location of the at least one assistant device, a latency of the at least one assistant device, information about an angle between the at least one assistant device and the access network device, a distance between the at least one assistant device and the access network device, or signal propagation time between the at least one assistant device and the access network device.

8. The method according to claim 6, wherein the RTOA is RTOA at which the uplink positioning signal arrives at the at least one assistant device, or the RTOA is RTOA at which the uplink positioning signal arrives at the access network device after passing through the at least one assistant device.

9. The method according to claim 6, wherein the TDOA is a TDOA between time at which the uplink positioning signals arrive at the different assistant devices, or the TDOA is a TDOA between time at which the uplink positioning signals arrive at the access network device after passing through the different assistant devices.

10. The method according to any one of claims 1 to 9, wherein the measurement result is carried in one or more of the following: a measurement response message or a measurement report message.

11. The method according to claim 5, wherein before the receiving, by an LMF network element, a measurement result from an access network device, the method further comprises:
sending, by the LMF network element, first information to the access network device, wherein the first information indicates the access network device to report the measurement result.

12. The method according to claim 2 or 11, wherein the first information is carried in a measurement request message.

13. The method according to claim 5, wherein the method further comprises:
receiving, by the location management network, the information about the at least one assistant device from the access network device.

14. The method according to claim 3 or 13, wherein the information about the at least one assistant device is carried in a transmission reception point information response message.

15. The method according to claim 13, wherein before the receiving, by the location management network, the information about the at least one assistant device from the access network device, the method further comprises:
sending, by the LMF network element, second information to the access network device, wherein the second information indicates the access network device to report the information about the at least one assistant device.

16. The method according to claim 4 or 13, wherein the second information is carried in a TRP information request message.

17. A communication method, wherein the method comprises:
sending, by an access network device, information about at least one assistant device to an LMF network element, wherein the information about the at least one assistant device is used by the LMF network element for determining a location of a terminal device, and the at least one assistant device is configured to reflect or forward an uplink positioning signal from the terminal device.

18. The method according to claim 17, wherein before the sending, by an access network device, information about at least one assistant device to an LMF network element, the method further comprises:
receiving, by the access network device, second information from the LMF network element, wherein the second information indicates the access network device to report the information about the at least one assistant device.

19. The method according to claim 17, wherein the method further comprises:
receiving, by the access network device, an uplink positioning signal from the at least one assistant device, wherein the uplink positioning signal is an uplink positioning signal sent by the terminal device; and
sending, by the access network device, a measurement result to the LMF network element, wherein the measurement result is determined based on the uplink positioning signal.

20. The method according to claim 19, wherein before the sending, by the access network device, a measurement result to the LMF network element, the method further comprises:
receiving, by the access network device, first information from the LMF network element, wherein the first information indicates the access network device to report the measurement result.

21. The method according to any one of claims 17 to 20, wherein there is a direct path between the at least one assistant device and the access network device.

22. A communication method, wherein the method comprises:
receiving, by an LMF network element, information about at least one assistant device from an access network device, wherein the information about the at least one assistant device is used by the LMF network element for determining a location of a terminal device, and the at least one assistant device is configured to reflect or forward an uplink positioning signal from the terminal device.

23. The method according to claim 17 or 22, wherein the information about the at least one assistant device is carried in a TRP information response message.

24. The method according to claim 17 or 22, wherein the information about the at least one assistant device comprises one or more of the following: an identifier of the at least one assistant device, a location of the at least one assistant device, a latency of the at least one assistant device, information about an angle between the at least one assistant device and the access network device, a distance between the at least one assistant device and the access network device, or signal propagation time between the at least one assistant device and the access network device.

25. The method according to claim 22, wherein before the receiving, by an LMF network element, information about at least one assistant device from an access network device, the method further comprises:
sending, by the LMF network element, second information to the access network device, wherein the second information indicates the access network device to report the information about the at least one assistant device.

26. The method according to claim 18 or 25, wherein the second information is carried in a TRP information request message.

27. The method according to claim 22, wherein the method further comprises:
receiving, by the LMF network element, a measurement result from the access network device, wherein the measurement result comprises the information about the at least one assistant device, and the at least one assistant device is configured to reflect or forward an uplink positioning signal from the terminal device; and
determining, by the LMF network element, the location of the terminal device based on the measurement result.

28. The method according to claim 19 or 27, wherein the measurement result comprises one or more of the following: the information about the at least one assistant device, RTOA, or a TDOA.

29. The method according to claim 28, wherein the RTOA is RTOA at which the uplink positioning signal arrives at the at least one assistant device, or the RTOA is RTOA at which the uplink positioning signal arrives at the access network device after passing through the at least one assistant device.

30. The method according to claim 28, wherein the TDOA is a TDOA between time at which the uplink positioning signals arrive at the different assistant devices, or the TDOA is a TDOA between time at which the uplink positioning signals arrive at the access network device after passing through the different assistant devices.

31. The method according to claim 27, wherein before the receiving, by the LMF network element, a measurement result from the access network device, the method further comprises:
sending, by the LMF network element, first information to the access network device, wherein the first information indicates the access network device to report the measurement result.

32. The method according to claim 20 or 31, wherein the first information is carried in a measurement request message.

33. The method according to any one of claims 19, 20, and 27 to 32, wherein the measurement result is carried in one or more of the following: a measurement response message or a measurement report message.

34. A communication method, wherein the method comprises:
receiving, by an assistant device, an uplink positioning signal from a terminal device; and
sending, by the assistant device to an access network device, the uplink positioning signal from the terminal device, or reflecting or forwarding, by the assistant device to an access network device, the uplink positioning signal from the terminal device.

35. A communication apparatus, wherein the apparatus comprises a receiving module and a sending module;
the receiving module is configured to receive an uplink positioning signal from at least one assistant device, wherein the uplink positioning signal is an uplink positioning signal sent by a terminal device; and
the sending module is configured to send a measurement result to an LMF network element, wherein the measurement result is determined based on the uplink positioning signal.

36. The apparatus according to claim 35, wherein the receiving module is further configured to: before the sending module sends the measurement result to the LMF network element, receive first information from the LMF network element, wherein the first information indicates the communication apparatus to report the measurement result.

37. The apparatus according to claim 35, wherein the sending module is further configured to send information about the at least one assistant device to the LMF network element.

38. The apparatus according to claim 37, wherein the receiving module is further configured to: before the sending module sends the information about the at least one assistant device to the LMF network element, receive second information from the LMF network element, wherein the second information indicates the communication apparatus to report the information about the at least one assistant device.

39. A communication apparatus, wherein the apparatus comprises a transceiver module and a processing module;
the transceiver module is configured to receive a measurement result from an access network device, wherein the measurement result comprises information about at least one assistant device, and the at least one assistant device is configured to reflect or forward an uplink positioning signal from a terminal device; and
the processing module is configured to determine a location of the terminal device based on the measurement result.

40. The apparatus according to claim 35 or 39, wherein the measurement result comprises one or more of the following: the information about the at least one assistant device, relative time of arrival RTOA, or a time difference of arrival TDOA.

41. The apparatus according to claim 40, wherein the information about the at least one assistant device comprises one or more of the following: an identifier of the at least one assistant device, a location of the at least one assistant device, a latency of the at least one assistant device, information about an angle between the at least one assistant device and the access network device, a distance between the at least one assistant device and the access network device, or signal propagation time between the at least one assistant device and the access network device.

42. The apparatus according to claim 40, wherein the RTOA is RTOA at which the uplink positioning signal arrives at the at least one assistant device, or the RTOA is RTOA at which the uplink positioning signal arrives at the access network device after passing through the at least one assistant device.

43. The apparatus according to claim 40, wherein the TDOA is a TDOA between time at which the uplink positioning signals arrive at the different assistant devices, or the TDOA is a TDOA between time at which the uplink positioning signals arrive at the access network device after passing through the different assistant devices.

44. The apparatus according to any one of claims 35 to 43, wherein the measurement result is carried in one or more of the following: a measurement response message or a measurement report message.

45. The apparatus according to claim 39, wherein the transceiver module is further configured to: before receiving the measurement result from the access network device, send first information to the access network device, wherein the first information indicates the access network device to report the measurement result.

46. The apparatus according to claim 36 or 45, wherein the first information is carried in a measurement request message.

47. The apparatus according to claim 39, wherein the transceiver module is further configured to receive the information about the at least one assistant device from the access network device.

48. The apparatus according to claim 37 or 47, wherein the information about the at least one assistant device is carried in a transmission reception point information response message.

49. The apparatus according to claim 47, wherein the transceiver module is further configured to: before receiving the information about the at least one assistant device from the access network device, send second information to the access network device, wherein the second information indicates the access network device to report the information about the at least one assistant device.

50. The apparatus according to claim 38 or 47, wherein the second information is carried in a TRP information request message.

51. A communication apparatus, wherein the apparatus comprises:
a sending module, configured to send information about at least one assistant device to an LMF network element, wherein the information about the at least one assistant device is used by the LMF network element for determining a location of a terminal device, and the at least one assistant device is configured to reflect or forward an uplink positioning signal from the terminal device.

52. The apparatus according to claim 51, wherein the apparatus further comprises:
a receiving module, configured to: before the sending module sends the information about the at least one assistant device to the LMF network element, receive second information from the LMF network element, wherein the second information indicates the communication apparatus to report the information about the at least one assistant device.

53. The apparatus according to claim 51, wherein the apparatus further comprises:
a receiving module, configured to receive an uplink positioning signal from the at least one assistant device, wherein the uplink positioning signal is an uplink positioning signal sent by the terminal device; and
the sending module is further configured to send a measurement result to the LMF network element, wherein the measurement result is determined based on the uplink positioning signal.

54. The apparatus according to claim 53, wherein the receiving module is further configured to: before the sending module sends the measurement result to the LMF network element, receive first information from the LMF network element, wherein the first information indicates the communication apparatus to report the measurement result.

55. The apparatus according to any one of claims 51 to 54, wherein there is a direct path between the at least one assistant device and the communication apparatus.

56. A communication apparatus, wherein the apparatus comprises:
a transceiver module, configured to receive information about at least one assistant device from an access network device, wherein the information about the at least one assistant device is used by the communication apparatus for determining a location of a terminal device, and the at least one assistant device is configured to reflect or forward an uplink positioning signal from the terminal device.

57. The apparatus according to claim 51 or 56, wherein the information about the at least one assistant device is carried in a TRP information response message.

58. The apparatus according to claim 51 or 56, wherein the information about the at least one assistant device comprises one or more of the following: an identifier of the at least one assistant device, a location of the at least one assistant device, a latency of the at least one assistant device, information about an angle between the at least one assistant device and the access network device, a distance between the at least one assistant device and the access network device, or signal propagation time between the at least one assistant device and the access network device.

59. The apparatus according to claim 56, wherein the transceiver module is further configured to: before receiving the information about the at least one assistant device from the access network device, send second information to the access network device, wherein the second information indicates the access network device to report the information about the at least one assistant device.

60. The apparatus according to claim 52 or 59, wherein the second information is carried in a TRP information request message.

61. The apparatus according to claim 56, wherein the transceiver module is further configured to receive a measurement result from the access network device, wherein the measurement result comprises the information about the at least one assistant device, and the at least one assistant device is configured to reflect or forward an uplink positioning signal from the terminal device; and
the apparatus further comprises a processing module, configured to determine the location of the terminal device based on the measurement result.

62. The apparatus according to claim 53 or 61, wherein the measurement result comprises one or more of the following: the information about the at least one assistant device, RTOA, or a TDOA.

63. The apparatus according to claim 62, wherein the RTOA is RTOA at which the uplink positioning signal arrives at the at least one assistant device, or the RTOA is RTOA at which the uplink positioning signal arrives at the access network device after passing through the at least one assistant device.

64. The apparatus according to claim 62, wherein the TDOA is a TDOA between time at which the uplink positioning signals arrive at the different assistant devices, or the TDOA is a TDOA between time at which the uplink positioning signals arrive at the access network device after passing through the different assistant devices.

65. The apparatus according to claim 63, wherein the transceiver module is further configured to: before receiving the measurement result from the access network device, send first information to the access network device, wherein the first information indicates the access network device to report the measurement result.

66. The apparatus according to claim 54 or 65, wherein the first information is carried in a measurement request message.

67. The apparatus according to any one of claims 53, 54, and 61 to 66, wherein the measurement result is carried in one or more of the following: a measurement response message or a measurement report message.

68. A communication apparatus, wherein the apparatus comprises a transceiver module, configured to: receive an uplink positioning signal from a terminal device; and send, to an access network device, the uplink positioning signal from the terminal device, or reflect or forward, to an access network device, the uplink positioning signal from the terminal device.

69. A communication apparatus, wherein the apparatus comprises a processor and a memory, the memory is configured to store computer instructions, and when the processor executes the instructions, the apparatus is enabled to perform the method according to any one of claims 1 to 34.

70. A communication system, wherein the communication system comprises the access network device according to any one of claims 1 to 4 and the LMF network element according to any one of claims 5 to 16; or the communication system comprises the access network device according to any one of claims 17 to 21, the LMF network element according to any one of claims 22 to 33, and the assistant device according to claim 34.

71. A computer program product, wherein the computer program product comprises a computer program, and when the computer program is run on a computer, the method according to any one of claims 1 to 34 is performed.

72. A computer-readable storage medium, comprising a computer program, wherein when the computer program is run on a computer, the method according to any one of claims 1 to 34 is performed.
